# EUROPÄISCHE PATENTSCHRIFT

(11) **EP 3 696 714 B1**
(45) Veröffentlichungstag und Bekanntmachung des Hinweises auf die Patenterteilung: **17.08.2022**
(21) Anmeldenummer: 20157907.5
(22) Anmeldetag: 18.02.2020
(51) Int. Cl.: G06K 7/10, A41D 19/00, G06K 7/00

(54) **ELEKTRONISCHER HANDSCHUH MIT BARCODE SCANNER**
ELECTRONIC GLOVE WITH BAR CODE SCANNER
GANT ÉLECTRONIQUE POURVU DE LECTEUR DE CODE À BARRES

(30) Priorität: 18.02.2019 DE 202019000757 U
(43) Veröffentlichungstag der Anmeldung: 19.08.2020
(73) Patentinhaber: Nimmsta GmbH, 85617 Assling (DE)
(72) Erfinder: Ruhland, Florian, 85435 Erding (DE); Funkenhauser, Andreas, 85617 Assling (DE)
(74) Vertreter: Misselhorn, Hein-Martin

(56) Entgegenhaltungen:
- DE-U1-202017 005 138
- US-A1- 2009 121 026

## Beschreibung

Die Erfindung betrifft ein elektronisches Kleidungsstück mit einem Textilelement, insbesondere einen Handschuh, Handüberzieher, Armstulpe oder dergleichen, mit einer Elektronikeinheit zum Auslesen eines Codes. Die Erfindung betrifft des Weiteren eine Elektronikeinheit, die insbesondere Bestandteil des elektronischen Kleidungsstücks sein kann. Die Erfindung betrifft auch eine Ladestation, die zum Laden der Elektronikeinheit des elektronischen Kleidungsstücks vorgesehen ist. Die Erfindung betrifft darüber hinaus ein Textilelement, das insbesondere Bestandteil des elektronischen Kleidungsstücks sein kann. Schließlich betrifft die Erfindung ein Verfahren zum Auslesen eines an einem Bauteil angebrachten Codes mit einem elektronischen Kleidungsstück.

### TECHNISCHER HINTERGRUND

Elektronische Kleidungsstücke, insbesondere Handschuhe, mit einer Elektronikeinheit zum Auslesen eines Codes werden beispielsweise eingesetzt in der Herstellung von Kraftfahrzeugen in der Automobilindustrie oder in vergleichbaren Logistikketten. An einem einzelnen zu montierenden Bauteil, beispielsweise an einer Frontschürze, ist ein Code angebracht. Kommt das zu montierende Bauteil Just-in-Time an das Band, dann hält der Bandarbeiter mit seiner Hand das elektronische Kleidungsstück, insbesondere die Elektronikeinheit, in die Nähe des Codes und liest den Code aus. Dadurch kann beispielsweise geprüft werden, ob das zu montierende Bauteil zum Fahrzeugrohbau passt.

Die US 2009/0121026 A1 zeigt ein elektronisches Kleidungsstück, welches an der Hand eines Benutzers getragen wird. Das Kleidungsstück ist über Fingerbänder und über ein Handgelenksband an der Hand des Benutzers festgelegt. Anspruch 1 ist gegen dieses Dokument abgegrenzt.

Die DE 20 2017 005 138 U1 zeigt eine Textileinheit mit einer Signalerfassungseinheit. Die Textileinheit ist mit zwei Schlaufen an der Hand des Benutzers befestigt, wobei eine Schlaufe in der Handinnenfläche verläuft.

Aufgrund eines sperrigen Aufbaus sind die aus dem Stand der Technik bekannten elektronischen Kleidungsstücke unbequem zu tragen und/oder umständlich zu bedienen. Darüber hinaus lassen sich die aus dem Stand der Technik bekannten elektronischen Kleidungsstücke oftmals nur schlecht reinigen.

### DIE ZUGRUNDE LIEGENDE AUFGABE

Es ist daher Aufgabe der Erfindung, ein elektronisches Kleidungsstück bereitzustellen, welches sich bequem tragen lässt, einfach und bequem zu bedienen ist und sich gut reinigen lässt.

### DIE ERFINDUNGSGEMÄSSE LÖSUNG

Die Aufgabe wird gelöst durch eine Elektronikeinheit gemäß Anspruch 1 bzw. durch ein elektronisches Kleidungsstück gemäß Anspruch 7.

Das elektronische Kleidungsstück umfasst ein Textilelement, insbesondere Handschuh, Handüberzieher, Armstulpe oder dergleichen, und ein am Textilelement fest verbundenes erstes Klettverschlusselement, vorzugsweise in Gestalt eines Flauschbandes. Es umfasst ferner die Elektronikeinheit gemäß Anspruch 1. Dabei umfasst die Elektronikeinheit eine Leseeinheit zum Auslesen eines Codes. Darüber hinaus umfasst die Elektronikeinheit einen willkürlich, im Regelfall durch Fingerbewegung, vom Benutzer betätigbaren Trigger, der oft als Taster, insbesondere als Drucktaster, ausgeführt sein wird. Für andere Fälle hat sich die Ausgestaltung des Triggers als Lichtschranke oder als Näherungssensor, bevorzugt kapazitiver Art, herausgestellt. Der Trigger ist über eine elektrische Leitung mit der Leseeinheit elektrisch verbunden. Bei Betätigung des Triggers startet die Leseeinheit zum Auslesen des Codes.

Bei alledem umfasst die Elektronikeinheit ein Hakenband. In der Arbeitsstellung ist das Hakenband fest mit dem Flauschband verbunden, wodurch die Elektronikeinheit fest mit dem Textilelement verbunden wird. In einer Pausenstellung ist das Hakenband reversibel vom Flauschband gelöst. Dadurch ist die Elektronikeinheit vom Textilelement getrennt.

Festzuhalten ist, dass die Begriffe "Hakenband" und "Flauschband" bevorzugt im Sinne ihrer engeren Bedeutung verstanden werden. Das Hakenband besteht dann aus lauter einzelnen hakenförmigen Gebilden, die im Regelfall nach einem regelmäßigen Muster angeordnet sind. Das Flauschband besteht ggf. aus einer Vielzahl von nach außen abstehenden Schlaufen zum Einhängen der Haken, die bevorzugt wirr angeordnet sind, ansonsten aber auch in einem geometrisch geordneten Muster positioniert sein können, etwa in Längs- und Querreihen aus hintereinander- und nebeneinanderstehenden Schlaufen.

Wenn die Begriffe "Hakenband" und "Flauschband" im Sinne ihrer weiteren Bedeutung verstanden werden, was auch im Schutzbereich der Erfindung liegen soll, dann kann z. B. das "Hakenband" auch aus "Haken" in der Art von beispielsweise Pilzköpfen bestehen. In gleicher Art und Weise kann auch oder stattdessen das Schlaufenband aus solchen "Haken" bestehen, etwa wiederum nach Art von echten Haken oder von Pilzköpfen - solange ein hinreichend fester, lösbarer und wieder reproduzierbarer Klettverbund zwischen dem Hakenband und dem Flauschband hergestellt werden kann. Meist wird das Flauschband mit dem Textilelement verbunden sein und das Hakenband mit der Elektronikeinheit. Das erleichtert die Waschbarkeit, da sich das Textilelement mit seinem Schlaufenband nicht mit anderem Waschgut zu verhaken droht, und schont vor allem das eher zu Deformationen oder zu Schäden neigende Hakenband, wenn mit dem Handschuh etc. gearbeitet wird, ohne die Elektronikeinheit angelegt zu haben, was in der Praxis immer wieder vorkommt.

Durch die Befestigung der Elektronikeinheit am Textilelement über das Hakenband und das Flauschband ist vom Benutzer eine individuelle, bequeme Trageposition der Elektronikeinheit am Textilelement wählbar. Dadurch wird das Tragegefühl des elektronischen Kleidungsstücks insgesamt als sehr bequem empfunden und die Akzeptanz des elektronischen Kleidungsstücks auf Seiten der Träger wird maßgeblich verbessert. Darüber hinaus kann die Elektronikeinheit relativ schnell vom Textilelement entfernt werden. Das bedeutet, dass z. B. der Bandarbeiter bei einem Arbeitsschritt, bei welchem die Elektronikeinheit als störend empfunden wird, einfach und schnell die Elektronikeinheit entfernen kann, ohne dass er das Textilelement ausziehen muss. Das erleichtert und vereinfacht das Arbeiten enorm und schont die Elektronikeinheit. Letztere läuft ansonsten Gefahr, aus Bequemlichkeit gelegentlich höheren Belastungen ausgesetzt zu werden, etwa wenn die die Elektronikeinheit führende Hand im Rahmen von gröberen Montagearbeiten einen Hammerschlag ausführen muss, um ein Klemmen bei der Montage zu überwinden, und der Arbeiter in der Eile versäumt, vorsorglich zuvor das elektronische Kleidungsstück komplett abzulegen.

Sinngemäß Gleiches gilt, wenn der Arbeiter im Zuge der Montage in Bereiche greifen muss, in denen nur wenig Platz für seine Hand bleibt.

Aufgrund des schnellen An- und Abbringens der Elektronikeinheit vom Textilelement kann also die produktive Arbeitsleistung des Bandarbeiters erhöht werden.

Generell gilt, dass Bandarbeit ein Einsatzgebiet ist. Ein anderes Einsatzgebiet ist die Logistik (Großlager, Paketdienste, Kommissionierer).

Durch die Trennung von Elektronikeinheit und Textilelement, wobei das Textilelement insbesondere frei von Elektronik ist, lässt sich das Textilelement auch sehr einfach reinigen, beispielsweise in einer Waschmaschine. Dadurch kann eine hygienische Nutzung des elektronischen Kleidungsstücks stets gewährleistet werden.

### BEVORZUGTE WEITERENTWICKLUNGEN DER ERFINDUNG

Vorteilhaft besteht das Flauschband aus einem Textil. Dadurch lässt sich das Textilelement samt Flauschband waschen und überdies ist der Tragekomfort erhöht. Insbesondere sind sämtliche Textilien mindestens teilweise, vorteilhaft vollständig, atmungsaktiv.

Vorzugsweise ist das Flauschband mit dem Textilelement vernäht. Dadurch ist eine feste Verbindung zwischen Flauschband und Textilelement gewährleistet. Darüber hinaus bleibt beim Vernähen trotz fester Verbindung von Flauschband und Textilelement das Anschmiegen des Textilelements an die Hand des Bandarbeiters gewährleistet. Es kann auch vorteilhaft sein, dass das Flauschband an ein beliebiges Textilelement, beispielsweise an einen vom Bandarbeiter individuell angefertigten Handschuh, angebracht, insbesondere vernäht, ist.

In manchen Fällen ist es besonders günstig, wenn das Flauschband (ggf. zusätzlich) mit dem Textilelement verklebt oder verschweißt ist. Die Verbindung zwischen dem Textilelement und dem Flauschband ist dann im Wesentlichen vollflächig, was das schnelle und kräftige Trennen des Klettverschlusses begünstigt, auch dann, wenn es beiläufig erfolgt und daher keiner besonderen Sorgfalt unterliegt. Zweckmäßig sind das Flauschband und das Textilelement einteilig ausgebildet, insbesondere ist das Textilelement als Flauschband ausgebildet. Dadurch kann das Elektronikelement nahezu auf dem gesamten Textilelement befestigt werden, wodurch die Befestigungsposition des Elektronikelements sehr variabel ist. Somit ist außerdem der Aufbau des Textilelements sehr einfach; gegebenenfalls könnte sogar ein Einweghandschuh vorgesehen sein, was die Hygiene stark erhöht.

Erfindungsgemäß ist beim Tragen des Textilelements an einer Hand eines Benutzers das Flauschband im Bereich des Handrückens angeordnet. Erfindungsgemäß ist in der Arbeitsstellung beim Tragen des Textilelements die Elektronikeinheit im Bereich des Handrückens angeordnet, meist zwischen den Knöcheln und dem Handgelenk. Damit kann die Leseeinheit bequem bedient und ggf. auch bequem abgelesen werden. Außerdem bleibt die Hand, insbesondere die Finger, des Bandarbeiters für andere Arbeitsschritte arbeitsfähig.

Vorzugsweise ist das Hakenband an einer flexiblen Leiterplatte, abgekürzt PCB für den englischen Begriff printed circuit board, angeordnet. Das Hakenband kann zu diesem Zweck einteilig mit der flexiblen Leiterplatte ausgebildet sein, um eine besondere Herstellungseffizienz zu erreichen. Dadurch ist ein kompakter Aufbau der Elektronikeinheit gewährleistet. Ansonsten kann die PCB auch in einer Art "Textilfutteral" oder "Textilschlauch" untergebracht sein, das bzw. der auf seiner einen Seite - vorzugsweise - mit dem Hakenband versehen ist. Für manche Anwendungsfälle ist es zweckmäßig, dass der Trigger ein Taster ist, bevorzugt ein Drucktaster. Meist ist er so gestaltet, dass er niedergedrückt durchschaltet und wieder in seine Unterbrecherposition zurückkehrt, wenn er wieder losgelassen wird. Er ist erfindungsgemäß derart - aber stets außerhalb der für Greifaufgaben freizuhaltenden Handfläche - positionierbar, dass er von dem Daumen der das elektronische Kleidungsstück tragenden Hand bedient werden kann. Dabei ist es besonders vorteilhaft, wenn der Taster variabel positionierbar ist. Das bedeutet, dass er vom Benutzer reversibel in unterschiedlichen Stellungen festgesetzt werden kann nachdem er zuvor gelöst wurde. Das ermöglicht es die Einheit passgenau an unterschiedliche Hand-Anatomien anzupassen. Das ermöglicht es darüber hinaus ein und demselben Benutzer im Laufe seines Arbeitstages den Taster geringfügig zu versetzen und umzupositionieren - um auf diese Art und Weise Ermüdungserscheinungen vorzubeugen wenn der Taster während des Arbeitstages mehrere 1000-mal gedrückt werden muss. Das setzt einen entsprechend ausgebildeten und positionierten Klettverschluss bzw. ein entsprechend ausgebildeten und angebrachten Besatz aus einem Flausch- und einem Hakenband voraus.

Dabei ist insbesondere vorgesehen dass der Taster in einem Bereich der Finger festgesetzt werden kann, namentlich im Zeigefingerseitenbereich oder nahe der Zeigefingerwurzel. Die Verbindung bzw. Leiterplattenverbindung zwischen dem Taster und der Einheit muss so geschnitten und derart flexibel sein, dass sie das zulässt.

Taster bzw. Drucktaster sind dabei bevorzugt, denn sie lassen sich einfach und sicher bedienen. Eine Fehlauslösung wird damit weitgehend unterbunden. Zweckmäßig ist der Taster auf der Leiterplatte angeordnet. Zweckmäßig führt die elektrische Leitung vom Taster, insbesondere Drucktaster, über die Leiterplatte zu einem Steuergerät in der Elektronikeinheit. Eine elektrische Leitung gewährleistet eine dauerhafte und unterbrechungsfreie Verbindung, so dass sichergestellt werden kann, dass bei Auslösen des Tasters das elektrische Signal über die Leiterplatte zum Steuergerät der Elektronikeinheit geführt wird.

Vorteilhaft umfasst die Elektronikeinheit ein Gehäuse, eine Decklage und das Hakenband. Vorteilhaft ist das Hakenband mit der Decklage verklebt. Vorteilhaft ist das Hakenband mit dem Gehäuse verschraubt. Damit ist ein einfacher und dennoch stabiler Aufbau der Elektronikeinheit gegeben.

Vorzugsweise umfasst das Hakenband eine Lasche, die zum Lösen der Elektronikeinheit von der Textileinheit vorgesehen ist. Der Bandarbeiter kann die Lasche greifen und damit die Elektronikeinheit vom Textilelement entfernen.

Zweckmäßig ist die Lasche frei von Haken. Damit steht die Lasche etwas ab vom Textilelement, wodurch der Bandarbeiter die Lasche einfach und schnell greifen kann.

Vorteilhaft ist der Taster, insbesondere der Drucktaster, in einer Sollposition im Bereich des Handrückens angeordnet, bevorzugt im Bereich zwischen Zeigefinger und Daumen - oft so, dass er durch seitliches Aneinanderpressen von Daumen und Zeigefinger bedient werden kann.

Idealerweise ist der Trigger bzw. Taster, insbesondere Drucktaster, in einer variablen Arbeitsposition an der Textileinheit befestigbar, wobei sich die Arbeitsposition in einem Umkreis von etwa +/- 8 mm von der Sollposition auf der Textileinheit befindet.

Insbesondere kann die Position des Drucktasters individuell, beispielsweise an eine kleine oder große Handgröße, angepasst werden.

Vorzugsweise umfasst die Leseeinheit einen Barcode-Scanner.

Noch bevorzugter umfasst die Leseeinheit einen RFID-Scanner oder idealerweise beides.

Zweckmäßig umfasst die Elektronikeinheit einen Bildschirm zur Anzeige von Informationen, beispielsweise zur Anzeige eines erfolgreichen oder eines erfolglosen Scanvorgangs, zur Anzeige des gescannten Produkts oder dergleichen. Damit kann direkt und schnell vom Bandarbeiter optisch überprüft werden, ob der Scanvorgang erfolgreich war und ob das Bauteil zum nächsten Fahrzeugrohbau passt.

Zweckmäßig umfasst die Elektronikeinheit eine akustische Signaleinheit, die insbesondere einen Bestätigungston bei einem positiven Scanvorgang ausgibt und die einen Warnton bei einem negativen Scanvorgang ausgibt, wobei sich der Bestätigungston vom Warnton akustisch unterscheidet. Besonders bevorzugt ist der Bildschirm ein Touchscreen. Ein solcher ertüchtigt den Bediener, besonders einfach auch weitere Aufgaben zu erledigen, wie z. B. die Annullierung einer fehlerhaften oder ungewollten Erkennung, oder zur Eingabe von Zusatzinformationen, etwa (z. B. im Automobilbereich) dahingehend, dass das verbaute Teil Nachbesserungsbedarf aufweist, weil z. B. die angelieferte Frontschürze einen leichten Kratzer zeigt und später am Fahrzeug nachpoliert werden muss. Beim Einsatz im Logistikbereich lässt sich auf diese Art und Weise z. B. ein Fehlbestand im Lager vermerken.

Idealerweise kann statt oder zusätzlich zu der akustischen Signaleinheit eine Vibro-Signaleinheit vorgesehen sein, also ein Vibrator oder Vibrationsmotor, der kurz eingeschaltet wird, um etwas zu signalisieren, und dann ein haptisches Feedback gibt.

Vorteilhaft umfasst die Elektronikeinheit ein Funk-Kommunikationsmodul, mit dem insbesondere eine Bluetooth-Verbindung oder eine andere ISM- bzw. eine SRD-Verbindung (z. B. über einen der Standards, wie ZigBee, ZWave oder Open Interconnect Consortium) mit einer externen Workstation herstellbar ist. Idealerweise wird dabei eines der sehr betriebssicheren und lizenzfreien Frequenzbänder mit 868 MHz oder 915 MHz genutzt. Dadurch können Informationen zwischen der Elektronikeinheit und der Workstation ausgetauscht werden. Insbesondere kann damit die Elektronikeinheit auf die auf der Workstation gespeicherten Datenbanken zugreifen. Insbesondere kann die Elektronikeinheit die auf der Workstation gespeicherten Datenbanken mit Daten füttern, beispielsweise kann die Elektronikeinheit an die Workstation die Informationen, welches Bauteil gescannt wurde, senden. Zweckmäßig ist die Elektronikeinheit, auch wenn sie auf dem Handrücken getragen wird, in Form einer Smart-Watch ausgebildet.

Vorteilhaft ist das Textilelement elektronikfrei ausgebildet. Dadurch kann das Textilelement einfach und günstig hergestellt werden. Darüber hinaus kann das Textilelement einfach gewaschen werden. Wenn erforderlich, kann das Textilelement, beispielsweise aus hygienischen Gründen, nach der Nutzung entfernt werden, ohne dass teure Elektronik ersetzt werden muss.

Vorteilhaft umfasst die Leseeinheit eine Fotozelleneinheit und eine Scaneinheit, wobei die Scaneinheit zum Scannen der Umgebung, insbesondere des Codes, vorgesehen ist, und wobei die Fotozelleneinheit den Code zur elektronischen Weiterverarbeitung abfotografiert. Dadurch kann schnell und einfach, insbesondere berührungslos, das zu verbauende Bauteil gescannt werden.

Vorzugsweise umfasst die insbesondere in Kunststoff ausgeführte Elektronikeinheit ein Gehäuse, wobei die Leseeinheit insbesondere innerhalb des Gehäuses angeordnet ist, und wobei das Gehäuse einen Boden umfasst. Dabei ist die Leseeinheit an einer am Boden des Gehäuses angeordneten Anlagefläche fest verbunden. Zugleich ist die Anlagefläche am Boden schwimmend und/oder federnd gelagert. Dadurch wird vermieden bzw. weitgehend verhindert, dass die Leseeinheit bei Herunterfallen der Elektronikeinheit und dem dadurch bedingten harten Aufschlagen auf dem Boden Schaden nimmt. Denn durch die schwimmende bzw. federnde Lagerung der Leseeinheit wird der Aufprall auf dem Boden für die Leseeinheit abgefedert, so dass nur so große Beschleunigungskräfte auftreten, wie sie die Leseeinheit vorteilhafterweise noch schadfrei ertragen kann. Die Fallhöhe ist insbesondere so hoch, wie sie bei einem ordnungsgemäßen Gebrauch, also etwa Mannshöhe, auftritt. Zweckmäßigerweise können auch höhere Höhen schadfrei überstanden werden, solche, wenn beispielsweise die Elektronikeinheit über ein Stockwerk hinweg, also beispielsweise bis zu etwa 10 m, zweckmäßig bis zu etwa 5 m, fällt.

Zweckmäßig sind Anlagefläche und Boden einteilig ausgebildet. Dadurch ist eine einfache und schnelle Herstellung ermöglicht.

Vorteilhaft sind Boden und Anlagefläche über eine Wandung, insbesondere integral, verbunden. Vorteilhaft ist die Wandstärke der Wandung dünner als die Wandstärke des Bodens und dünner als die Wandstärke der Anlagefläche, so dass die Wandung die schwimmende und/oder federnde Lagerung der Anlagefläche am Boden ermöglicht. Vorzugsweise umschließt die Wandung die Anlagefläche vollständig. Insbesondere umrundet die Wandung die Anlagefläche oval, kreisförmig, elliptisch oder dergleichen. Dadurch ist eine einfache, aber sehr effektive, schwimmende/federnde Lagerung ermöglicht.

Zweckmäßig ist die Anlagefläche von der Außenseite des Bodens abgesetzt, wobei die Außenseite des Bodens die Seite ist, die auf der Außenseite des Gehäuses angeordnet ist. Dadurch kann die Anlagefläche auch dann federn, wenn die Elektronikeinheit plan mit der Unterseite auf den Boden aufschlägt und daher insbesondere nicht jede nicht zurückspringende Oberfläche "auf Block" mit dem Boden ginge.

Vorteilhaft ist die an der Anlagefläche fest verbundene Leseeinheit berührungslos zum Boden gelagert.

Zweckmäßigerweise ist dabei zwischen Boden und Leseeinheit ein Abstand realisiert, insbesondere ein Abstand von mindestens etwa 0,1 mm, bevorzugt mindestens etwa 0,2 m, und insbesondere höchstens etwa 1 mm, bevorzugt höchstens etwa 0,5 mm. Dadurch wird verhindert, dass beim Aufprallen der Elektronikeinheit die Leseeinheit soweit durchfedert, dass sie auf den Gehäuseboden aufprallt. Damit ist demnach genug Spiel vorhanden, so dass die Leseeinheit durchfedern kann.

Vorzugsweise ist in der Anlagefläche eine Bohrung vorgesehen, wobei die Bohrung die Außenseite des Gehäuses mit der Innenseite des Gehäuses verbindet. Dadurch kann die Leseeinheit mittels einer durch die Bohrung geführten Befestigungsschraube an der Anlagefläche fest verschraubt werden. Vorzugsweise weist die Anlagefläche einen in den Innenraum des Gehäuses ragenden Positionierungsstift auf. Der insbesondere als Passstift ausgeführte Positionierungsstift positioniert die Leseeinheit an der Anlagefläche. Dadurch kann die Leseeinheit bei der Montage schnell und einfach korrekt gesetzt, d. h. in der bestimmungsgemäßen Position befestigt werden.

Vorteilhaft umfasst die Elektronikeinheit ein mindestens dreilagiges Tasterpad. Eine untere Lage des Tasterpads umfasst oder bildet das Hakenband. Eine mittlere Lage des Tasterpads umfasst oder bildet eine flexible Leiterplatte, die elektrisch an den Trigger angeschlossen ist. Dabei schließt eine obere Lage, insbesondere Decklage, des Tasterpads die Elektronikeinheit ab. Im Regelfall ist die mittlere Lage zwischen der unteren Lage und der Decklage angeordnet.

Vorteilhaft umfasst die Decklage eine Aussparung für den Trigger. Meist ist über der Aussparung der Decklage eine Kappe angeordnet, die eine gehäuseartige Vertiefung aufweist. Der Trigger ist in der gehäuseartigen Vertiefung angeordnet, insbesondere so, dass der Trigger mindestens von der unteren Lage, der Decklage und der Kappe überwiegend oder im Wesentlichen vollständig umschlossen ist. Zweckmäßig ist die Kappe panzerartig ausgebildet. Das ist zum Beispiel dann der Fall, wenn das Material der Kappe so steif und dick gewählt ist, dass sich die Kappe auch bei Verdoppelung der im Betrieb zu erwartenden Maximalkräfte nicht um mehr als 0,15 mm in sich eindrücken lässt, hin in Richtung des von ihr gebildeten Gehäuseinnenraums. Dadurch ist der Trigger sicher und fest im Tasterpad integriert. Insbesondere ist der Trigger durch die Kappe, insbesondere Panzerkappe, vor mechanischen Einwirkungen weitgehend geschützt.

Vorzugsweise weist die Kappe eine, insbesondere zentrale, auf der der Decklage abgewandten Außenseite der Kappe angeordnete Bohrung auf. Dabei ragt aus der Bohrung ein Taster des Triggers, so dass der Benutzer den Taster des Triggers betätigen kann. Vorzugsweise ist die Kappe massiv, insbesondere stoßfest, ausgebildet.

Zweckmäßig ist die Kappe mit der Decklage verklebt. Zweckmäßig ist die untere Lage mit der mittleren Lage und/oder die mittlere Lage mit der oberen Lage verklebt. Durch die Verklebung erfolgt eine einfache, zugleich feste und insbesondere teilweise auch flexible Verbindung der einzelnen Lagen. Zweckmäßig umfasst der Klebstoff Cyanacrylat, insbesondere Ethyl-Cyanacrylat, und ist beispielsweise des Typs LOCTITE^{®} 480^{™}.

Vorteilhaft ist zur Betätigung des Triggers eine Betätigungskraft von nicht mehr als etwa 10 N, insbesondere nicht mehr als etwa 5 N, besonders vorteilhaft von nicht mehr als etwa 3,5 N erforderlich. Vorteilhaft weist der Trigger einen Tastenhub von höchstens etwa 1 mm, bevorzugt von höchstens etwa 0,5 mm, besonders bevorzugt von höchstens etwa 0,3 mm auf. Dadurch kann der Trigger von einem Benutzer viele 1000 Male am Tag erfolgen, ohne dass Ermüdungserscheinungen beim Benutzer, insbesondere beim Daumen des Benutzers, auftreten. Zeitgleich ist gewährleistet, dass keine unbeabsichtigte Fehlauslösung erfolgt.

Vorzugsweise ist der Trigger mindestens etwa 10 000 Mal, insbesondere mindestens etwa 100 000 Mal, bevorzugt mindestens etwa 1 000 000 Mal, besonders bevorzugt mindestens etwa 2 000 000 Mal betätigbar. Dadurch ist eine lange Laufzeit bzw. Lebensdauer des Triggers gewährleistet.

Zweckmäßig umfasst der Trigger einen, insbesondere runden, Betätigungsknopf, wobei der Betätigungsknopf einen Durchmesser von höchstens etwa 6 mm, bevorzugt von höchstens etwa 5 mm, besonders bevorzugt von höchstens etwa 4 mm aufweist. Zweckmäßig entspricht die Ausgestaltung des Triggers der der Typen Panasonic EVQP0, EVQQ2, EVQ6Q2 oder EVQ7Q2.

Die erfindungsgemäße Elektronikeinheit kann mittels einer Ladestation, welche nicht Bestandteil der vorliegenden Erfindung ist, geladen werden. Diese zeichnet sich dadurch aus, dass die Ladestation ein Ladegehäuse umfasst, wobei das Ladegehäuse eine Lademulde umfasst, welche zur Aufnahme der Elektronikeinheit vorgesehen ist.

Vorteilhaft weist das Ladegehäuse mindestens einen Zentriervorsprung zum Positionieren der Elektronikeinheit in der Lademulde auf. Vorteilhafterweise ragt der Zentriervorsprung in die Lademulde und ist insbesondere nasenförmig ausgebildet. Im Regelfall umfasst die Lademulde einen Ladeboden und Ladewände, wobei der Zentriervorsprung dann an einer der Ladewände angeordnet ist. Zweckmäßig sind sämtliche Kanten, insbesondere die Kanten der Ladewände, abgerundet. Diese Ausbildung hat den Vorteil, dass die Elektronikeinheit sehr schnell vom Benutzer in die Ladestation eingeführt werden kann und dort zugleich zentriert wird, so dass die Elektronikeinheit geladen wird. Die Schnelligkeit ist hierbei insbesondere wichtig, da oftmals die Montagezeiten kurz sind und hier ein schnelles und sicheres Laden erforderlich ist.

Idealerweise umfasst die Ladestation eine Befestigungsvorrichtung zum Befestigen der Elektronikeinheit. Insbesondere ist die Befestigungsvorrichtung als Bügel, insbesondere Klappbügel, oder als Spanngurt, insbesondere Gummiband, Federandruckspange oder dergleichen, ausgebildet. Dadurch wird sichergestellt, dass die Elektronikeinheit nah und fest an der Ladestation, insbesondere ohne Luftspalt, liegt, so dass das Laden, insbesondere induktive Laden, optimal funktioniert. Des Weiteren kann damit die Ladestation beispielsweise an einer Wand angebracht werden, und die in der Ladestation angeordnete Elektronikeinheit wird gegen die Schwerkraft sicher gehalten und fällt nicht heraus.

Zweckmäßigerweise umfasst die Ladestation Vorrichtungen zum induktiven Laden der Elektronikeinheit. Damit sind offene elektrische Kontaktstellen, die anfällig sind für Korrosion und/oder Schmutz, nicht erforderlich. Das Laden erfolgt so besonders sicher.

Besonders günstig ist es, wenn die Ladestation mindestens eine Verbindungsvorrichtung umfasst, mit welcher sich die Ladestation mit einer insbesondere baugleichen zweiten Ladestation verbinden lässt, insbesondere fest verbinden. Dadurch können mehrere einzelne Ladestationen zusammengesetzt werden. Gegebenenfalls lassen sich die einzelnen Ladestationen, insbesondere über Schrauben, auch an einer Halterung, wie beispielsweise einem Brett, einem Blech oder dergleichen befestigen, bevorzugt mehrere Ladestationen nebeneinander.

Vorzugsweise weist die Ladestation mehrere, insbesondere mindestens etwa 2, bevorzugt mindestens etwa 6, besonders bevorzugt mindestens etwa 10, und insbesondere höchstens 50, bevorzugt höchstens etwa 20, besonders bevorzugt höchstens etwa 16 Lademulden auf.

Die eingangs genannte Aufgabe wird alternativ gelöst durch ein Textilelement, insbesondere in Gestalt eines Handschuhs, eines Handüberziehers, einer Armstulpe oder dergleichen, mit einem am Textilelement fest verbundenen ersten Klettverschlusselement, vorzugsweise in Form eines Flauschbandes. Hiermit kann am Textilelement eine Elektronikeinheit über ein daran angebrachtes zweites Klettverschlussteil, vorzugsweise in Gestalt eines Hakenbandes, verbunden werden. Dabei ist es so, dass in einer Arbeitsstellung das Hakenband mit dem Flauschband fest verbindbar ist. Dadurch ist auch die Elektronikeinheit fest mit dem Textilelement verbindbar. In einer Pausenstellung ist das Hakenband vom Flauschband lösbar. Somit ist die Elektronikeinheit vom Textilelement trennbar. Dabei umfasst die Elektronikeinheit insbesondere eine Leseeinheit zum Auslesen eines Codes. Sodann umfasst die Elektronikeinheit insbesondere einen Trigger, der insbesondere über eine elektrische Leitung mit der Leseeinheit elektrisch verbunden ist. Die Betätigung des Triggers startet insbesondere die Leseeinheit zum Auslesen des Codes.

Die eingangs genannte Aufgabe wird alternativ gelöst durch ein Verfahren zum Auslesen eines an einem Bauteil angebrachten Codes mit einem elektronischen Kleidungsstück nach einem der Ansprüche 7 bis 11, mit den folgenden Verfahrensschritten:
a) Anziehen des Textilelements durch einen Benutzer,
b) Verbinden der Elektronikeinheit mit dem Textilelement, insbesondere festes Verbinden des ersten mit dem zweiten Klettverschlussteil, so dass das elektronische Kleidungsstück in der Arbeitsstellung vom Benutzer verwendbar ist,
c) vorzugsweise unabhängig davon erfolgende Anordnung des Triggers in seiner optimal mit einem Finger erreichbaren Arbeitsposition und anschließende Verbindung mit dem Textilelement,
d) Auslesen des mindestens einen Auslesecodes des mindestens einen Bauteils, wobei der Benutzer den Trigger betätigt und dadurch die Leseeinheit den Code ausliest,
e) gegebenenfalls einfache oder mehrfache Wiederholung des Verfahrensschrittes c), insbesondere beim Scannen von Codes von mehreren Bauteilen,
f) Lösen der Elektronikeinheit vom Textilelement, so dass in der Pausenstellung der Benutzer, insbesondere ohne Elektronikeinheit, arbeitsfähig ist.

Vorzugsweise wiederholt der Benutzer nach dem Arbeitsschritt e) die Arbeitsschritte b) bis e), insbesondere einfach oder mehrfach. Der Benutzer kann somit mehrere Bauteile scannen. Alternativ kann der Benutzer auch ohne Scannen weiterarbeiten. Vorteilhaft legt der Benutzer nach dem Arbeitsschritt e) die Elektronikeinheit zum Laden der Elektronikeinheit in einer Ladestation, welche nicht Bestandteil der vorliegenden Erfindung ist, ab. Dadurch hat der Benutzer - bis auf die Textileinheit - wieder freie Hände und kann gut arbeiten. Insbesondere hat der Benutzer keine Beschädigung an der Elektronikeinheit und/oder am Bauteil beim Arbeiten zu befürchten. Zeitgleich kann der Benutzer auch in enge Spalte fassen, ohne dass die Elektronikeinheit eine Zugänglichkeit in die engen Spalte gefährdet.

Weitere Merkmale und Vorteile der Erfindung ergeben sich aus der nachfolgenden Beschreibung mindestens eines Ausführungsbeispiels sowie aus den beigefügten Zeichnungen, auf die in der Beschreibung Bezug genommen wird. In den Zeichnungen zeigen:

### FIGURENLISTE

Fig. 1: ein von einem Benutzer getragenes elektronisches Kleidungsstück in Arbeitsstellung in einer Schrägansicht,
Fig. 2: das vom Benutzer getragene elektronische Kleidungsstück in Pausenstellung in einer Schrägansicht,
Fig. 3: das vom Benutzer getragene elektronische Kleidungsstück in Pausenstellung in einer Schrägansicht, wobei ein Textilelement und ein Flauschband zur Illustration getrennt dargestellt sind,
Fig. 4: eine Elektronikeinheit in schematischer Explosionsdarstellung,
Fig. 5: eine flexible Leiterplatte mit einer Decklage in Schrägansicht,
Fig. 6: das vom Benutzer getragene elektronische Kleidungsstück in Arbeitsstellung in einer Schrägansicht mit schematischer Darstellung der Positioniermöglichkeit eines Tasters,
Fig. 7 einen Gehäuseabschnitt der Elektronikeinheit in Untenansicht,
Fig. 8 den Gehäuseabschnitt der Elektronikeinheit in Innenansicht,
Fig. 9 den Gehäuseabschnitt der Elektronikeinheit in Innenansicht mit verbauter Leseeinheit,
Fig. 10 ein Tasterpad in einer schematischen Explosionsdarstellung,
Fig 11 und 12 das Tasterpad in Obenansicht,
Fig. 13 das Tasterpad in einer Detailansicht in Schnittdarstellung im Schnitt A-A nach Fig. 12,
Fig. 14 das Tasterpad in perspektivischer Ansicht,
Fig. 15 eine Ladestation in einer Explosionsdarstellung,
Fig. 16 die Ladestation in einer perspektivischen Darstellung,
Fig. 17 und 18 die Ladestation in einer Obenansicht mit eingesetzter Elektronikeinheit,
Fig. 19 und 20 die Ladestation in einer perspektivischen Ansicht mit eingesetzter Elektronikeinheit,
Fig. 21 eine weitere Ausführungsform einer Ladestation mit mehreren Lademulden in einer Explosionsdarstellung, und
Fig. 22 die weitere Ausführungsform der Ladestation mit mehreren Lademulden in einer perspektivischen Ansicht.

### AUSFÜHRUNGSBEISPIEL

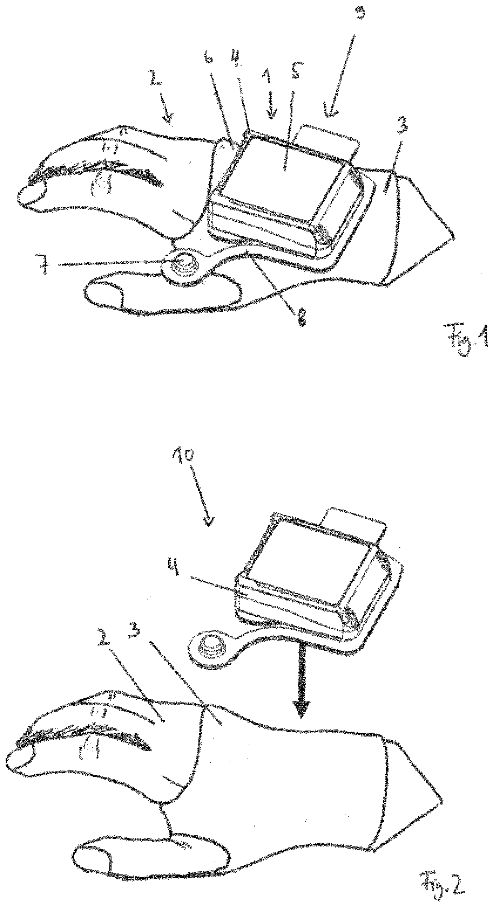

Fig. 1 zeigt ein elektronisches Kleidungsstück 1. Das elektronische Kleidungsstück 1 ist von einem Benutzer 2 getragen, wobei in Fig. 1 nur die Hand des Benutzers 2 dargestellt ist.

Das elektronische Kleidungsstück 1 umfasst ein Textilelement 3. Das Textilelement 3 ist im Regelfall ein Handschuh, Handüberzieher, Armstulpe oder dergleichen. Das Textilelement 3 umschließt in angelegtem Zustand den Handrücken einschließlich der Knöchel sowie das Handgelenk. Die Finger und der Daumen sind vom Textilelement 3 nicht umschlossen. Idealerweise handelt es sich bei dem Textilelement um den hier gezeigten fingerlosen Handschuh mit einem gemeinsamen Austritt für die vier Hauptfinger und einem abgetrennten Austritt für den Daumen.

In einem weiteren Ausführungsbeispiel können die Finger und/oder der Daumen vom Textilelement 3 umschlossen sein.

Das Textilelement 3 besteht aus einem Textil, beispielsweise aus einem natürlichen, beispielsweise Baumwolle, oder künstlich hergestellten, beispielsweise Nylon, Stoff.

Im Ausführungsbeispiel umfasst das Textilelement keine elektrischen oder elektronischen Bauteile, ist also elektronikfrei ausgebildet.

Das in Fig. 1 gezeigte elektronische Kleidungsstück 1 umfasst eine Elektronikeinheit 4. Die Elektronikeinheit 4 umfasst eine in den Figuren nicht dargestellte Leseeinheit 6. Die Leseeinheit 6 ist zum Auslesen eines Codes vorgesehen. Im Ausführungsbeispiel ist die Leseeinheit 6 ein Scanner zum Scannen eines Barcodes. Diese Leseeinheit 6 kann auch als ein Scanner zum Scannen eines RFID-Chips ausgebildet sein. Die Leseeinheit 6 kann auch mehrere Scanner umfassen, beispielsweise einen Scanner zum Auslesen des Barcodes und einen Scanner zum Auslesen eines RFID-Chips.

Im Ausführungsbeispiel nach Fig. 1 ist die Leseeinheit 6 so angeordnet, dass der vom Scanner ausgesandte Scanstrahl oberhalb der Finger, etwa parallel zum Handrücken, verläuft. Damit kann der Benutzer 2 bequem einen Code scannen, der vor dem Benutzer angeordnet ist.

Der Barcode und/oder der RFID-Chip sind typischerweise an in den Figuren nicht dargestellten Bauteilen angebracht, die typischerweise in einer Fertigungslinie zum Herstellen eines Endprodukts verbaut werden. Im Ausführungsbeispiel ist das Endprodukt ein Kraftfahrzeug und ein Bauteil, beispielsweise eine Frontschürze, wobei die Frontschürze mit dem Barcode und/oder RFID-Chip versehen ist. Kommt das Bauteil Just-in-Time an die Fertigungslinie, so kann der Benutzer 2, in diesem Fall also ein Bandarbeiter, das Bauteil vor dem Verbauen mit der Leseeinheit 6 scannen. Dadurch wird elektronisch festgehalten, welches Bauteil am zu fertigenden Fahrzeug verbaut ist.

Darüber hinaus umfasst die Elektronikeinheit ein Display 5, auch Bildschirm genannt, welches im Ausführungsbeispiel als Touchscreen ausgebildet ist. Das Touchscreen dient zur Eingabe von Informationen, insbesondere zur Eingabe von standardisierten Vorgängen, oder dergleichen. Am Display 5 können Informationen angezeigt werden, beispielsweise die Information, welches Bauteil verbaut werden muss, verbaut wurde, und/oder ob das richtige Bauteil verbaut wurde, die Anzeige eines erfolgreichen oder eines erfolglosen Scanvorgangs ist möglich oder die bestätigende Anzeige des gescannten Produkts oder dergleichen. Am Display 5 kann auch angezeigt werden, welches Bauteil als nächstes verbaut werden muss, welches Bauteil also als nächstes gescannt werden muss.

Für einen Mitarbeiter in der Logistik, der sich des erfindungsgemäßen Geräts bedient, können auch die Informationen zum nächsten Auftrag angezeigt werden, wie z.B. Gang, Fach, Platz, Artikel und Stückzahl. Somit muss der Mitarbeiter für den nächsten Pickvorgang weder zum Staplerterminal noch das Display des Handys oder Handhelds ansehen.

Alternativ oder zusätzlich zum Display 5 kann ein Tongeber vorgesehen sein. Der Tongeber kann beispielsweise das korrekte Scannen des Bauteils akustisch mit einem Bestätigungston bestätigen. Der Tongeber kann beispielsweise auch ein fehlerhaftes Scannen mit einem Warnton bestätigen, wobei sich der Warnton vom Bestätigungston unterscheidet. Der Tongeber kann beispielsweise auch ein Scannen eines falschen Bauteils, beispielsweise einer Frontschürze in einer falschen Farbe, mit einem Signalton bestätigen, wobei sich der Signalton vom Warnton und vom Bestätigungston unterscheidet.

Die Elektronikeinheit 4 umfasst einen Trigger, der hier in Gestalt eines Tasters 7 ausgeführt ist. Der Taster 7 ist im Ausführungsbeispiel als Drucktaster ausgeführt. Der Taster 7 ist vorgesehen, um nach dem Betätigen einen Scanvorgang auszulösen. Der Taster 7 ist erfindungsgemäß in einem Bereich angeordnet, an welchem der Benutzer 2 den Taster 7 mit dem Daumen der Hand betätigen kann, auf welcher der Benutzer 2 das elektronische Kleidungsstück 1 trägt.

Der Taster 7 ist erfindungsgemäß über eine elektrische Leitung 8 mit der Leseeinheit 6 elektrisch verbunden. Im Ausführungsbeispiel führt die elektrische Leitung 8 vom Taster 7 zu einem nicht dargestellten, in der Elektronikeinheit 4 verbauten, Steuergerät, wobei das Steuergerät mit der Leseeinheit 6, mit dem Display 5 und dergleichen elektrisch verbunden ist und das elektronische Kleidungsstück 1 elektronisch steuert.

Durch die Verbindung mit einer elektrischen Leitung 8 kann sichergestellt werden, dass die elektrischen Signale fehlerfrei beim Steuergerät ankommen. Fehlauslösungen oder Nicht-Auslösungen sind dadurch weitgehend unterbunden, im Gegensatz zu kabellosen Systemen zum Beispiel. Dadurch ist das Gerät sehr anwendungsfreundlich.

Gesagt sei, dass (bevorzugt auch an der gleichen räumlichen Position und ggf. auch positionsvariabel) an Stelle des gezeigten Tasters auch ein anderweitiger Sensor vorgesehen sein kann, etwa ein Näherungssensor.

Dieser kann entweder so positioniert und eingestellt sein, dass er anspricht, wenn sich ein Finger des Benutzers, etwa dessen Daumen, ihm nähert, so dass der Benutzer mit einer bestimmten, meist "kurzen" Fingerbewegung triggern kann. Alternativ kann der Näherungssensor so positioniert und eingestellt sein, dass er - etwa in Richtung über den Handrücken hinweg - erkennt, ob sich die Hand einem (größeren) Gegenstand nähert und dann automatisch triggert bzw. den Scanner in Betriebsbereitschaft versetzt.

Alternativ kann im gleichen Sinne etwa eine Lichtschranke verwendet werden.

In manchen Fällen wird ein Sensor verwendet, der z. B. erkennt, wenn der Benutzer überhaupt oder in bestimmter Art und Weise eine Faust ballt und dann triggert, im o. g. Sinne. Hierzu kann auch ein, z. B. vom Benutzer, anlernbarer Sensor verwendet werden.

Die Elektronikeinheit 4 umfasst bei diesem Ausführungsbeispiel ein in den Figuren nicht dargestelltes, insbesondere vom Steuergerät gesteuertes Bluetooth oder z. B. ZigBee Kommunikationsmodul. Hiermit ist eine entsprechende Verbindung mit einer in den Figuren nicht dargestellten externen Workstation herstellbar.

Das elektronische Kleidungsstück 1 ist in der Form einer Smart Watch ausgebildet und/oder mit einer solchen koppelbar, wobei im Wesentlichen die Leseeinheit 6 mit der Smart Watch gekoppelt ist.

In Fig. 1 ist das elektronische Kleidungsstück 1 in einer Arbeitsstellung 9 gezeigt. In der Arbeitsstellung 9 ist die Elektronikeinheit 4 fest mit dem Textilelement 3 verbunden.

Fig. 2 zeigt das elektronische Kleidungsstück 1 in einer Pausenstellung 10. In der Pausenstellung 10 ist die Elektronikeinheit 4 vom Textilelement 3 getrennt. In der Pausenstellung 10 kann der Benutzer 2 zwar die Elektronikeinheit 4, insbesondere die Leseeinheit 6, nicht nutzen. Allerdings kann der Benutzer 2 in der Pausenstellung 10 anderen Tätigkeiten nachkommen, beispielsweise das zuvor gescannte Bauteil am herzustellenden Fahrzeug verbauen. Die Änderung von Pausenstellung 10 (Fig. 2) zu Arbeitsstellung 9 (Fig. 1) und zurück kann mehrfach vorgenommen werden.

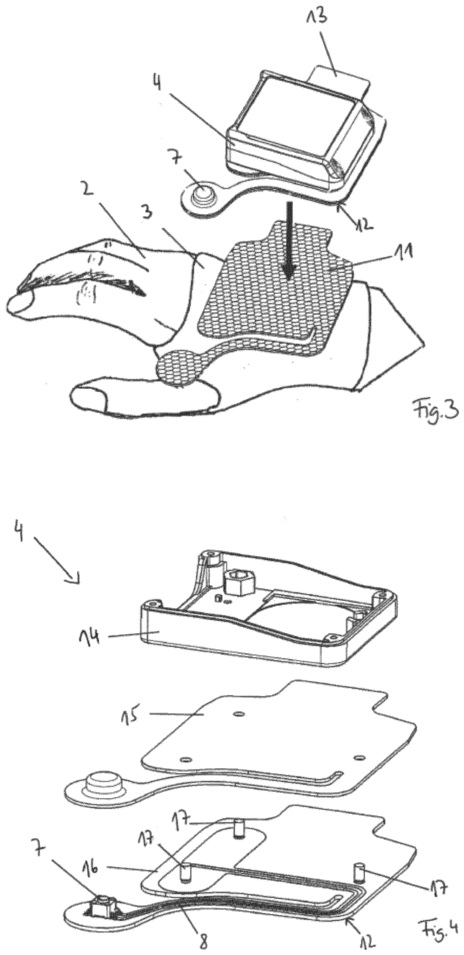

Hierzu ist ein in Fig. 3 gezeigtes Flauschband 11 vorgesehen, welches mit dem Textilelement 3 fest verbunden, im Ausführungsbeispiel vernäht, ist. In einem weiteren Ausführungsbeispiel kann das Flauschband 11 auch mit dem Textilelement 3 verklebt sein. In einem weiteren Ausführungsbeispiel kann das Flauschband 11 auch einteilig mit dem Textilelement 3 ausgebildet sein. Das Flauschband wird bevorzugt mehrteilig ausgeführt und dann auf den Handschuh aufgenäht und oder mit ihm verklebt.

Das Flauschband 11 ist im Bereich des Handrückens fest mit dem Textilelement 3 verbunden. An der Unterseite der Elektronikeinheit 4 ist ein Hakenband 12, alternativ auch Schlaufenband, angeordnet. Das Hakenband 12 verhakt sich in der Arbeitsstellung 9 (Fig. 1) mit dem Flauschband 11, wodurch die Elektronikeinheit 4 fest mit dem Textilelement 3 verbunden ist. Umgangssprachlich handelt es sich um einen "Klettverschluss". Es versteht sich von selbst, dass in einem weiteren Ausführungsbeispiel das Hakenband 12 am Textilelement 3 und das Flauschband 11 an der Elektronikeinheit 4 angeordnet sein kann, wobei die Funktion des "Klettverschlusses" auch in diesem Ausführungsbeispiel uneingeschränkt funktioniert.

Zum Lösen der Elektronikeinheit 4 vom Textilelement 3, also vom Wandeln der Arbeitsstellung 9 (Fig. 1) in die Pausenstellung 10 (Fig. 2), ist eine Lasche 13 vorgesehen. Die Lasche 13 ist an der Seite der Elektronikeinheit 4 angeordnet, die der Seite, an der der Taster 7 angeordnet ist, gegenüberliegt. Im Ausführungsbeispiel ist die Lasche 13 an der Seite der Elektronikeinheit 4 angeordnet, die in der Arbeitsstellung 9 (Fig. 1) vom Daumen weg zeigt. Die Lasche 13 ist zum Greifen vorgesehen. Der Benutzer greift die Lasche 13 und kann damit die Elektronikeinheit 4 einfach und leicht vom Textilelement 3 lösen. Im Ausführungsbeispiel sind im Bereich der Lasche 13 keine Haken am Hakenband 12 vorgesehen, so dass die Lasche 13 nicht direkt am Flauschband haftet. In einem weiteren Ausführungsbeispiel kann aber vorgesehen sein, dass Haken auch an der Lasche 13 vorgesehen sind, damit die Lasche 13 am Flauschband 11 haftet und sich nicht weitgehend frei bewegen kann, so dass versehentlich die Elektronikeinheit gelöst wird.

Fig. 4 zeigt einen Teil der Elektronikeinheit 4. Die Elektronikeinheit 4 umfasst ein Gehäuse 14. Nicht in Fig. 4 dargestellt ist das in Fig. 1 gezeigte Display 5, welches mit dem Gehäuse 14 verschraubt ist. Die in Fig. 4 gezeigte Elektronikeinheit umfasst eine Decklage 15 und eine flexible Leiterplatte 16, auch Flex-PCB (printed curcuit board) genannt. An der flexiblen Leiterplatte 16 ist der Taster 7 angeordnet und in der flexiblen Leiterplatte 16 läuft die elektrische Leitung 8. An der Unterseite der flexiblen Leiterplatte 16 ist das Hakenband 12 angeordnet. Im Ausführungsbeispiel ist das Hakenband 12 einteilig mit der flexiblen Leiterplatte 16 ausgebildet.

Bemerkenswert ist der Verlauf der flexiblen Leiterplatte zwischen ihrer Großfläche, die unterseitig gegen das Gehäuse 14 anliegt.

Der von der Großfläche wegstrebende Teil der flexiblen Leiterplatte zweigt - bevorzugt von einer der Ecken - von der Großfläche ab. Er bildet nun einen gegenüber der Großfläche um den Faktor 5 bis 12 kleineren schmalen Pfad, von meist ca. 8 mm bis 15 mm Breite. Dieser Pfad läuft im Regelfall zunächst mit Abstand eine Seitenkannte der Großfläche entlang. An bzw. in der Nähe der anderen Ecke macht der Pfad einen Bogen, um dann vorzugsweise in etwa in Richtung der Diagonalen der Großfläche nach außen zu streben, weg von der Großfläche.

An seinem Ende ist meist ein Bogen in Gegenrichtung zum vorerwähnten Bogen vorgesehen. Danach vergrößert sich der Pfad und bildet dort eine gegenüber dem bisherigen Pfad vergrößerte Fläche, meist im Wesentlichen in Gestalt eine Quadrats oder Rechtecks. Die Vergrößerung des Pfades bildet eine Basis mit genug Platz für einen Schalter und dessen Schutzeinrichtungen. Die anderen vorgenannten Lagen folgen diesem Verlauf und dieser Gestalt der flexiblen Leiterplatte. Der Vorteil dieses speziellen Verlaufs ist, dass der Schalter ergonomisch besonders günstig positioniert werden kann und bei alledem auch noch eine Lagekorrigierbarkeit für den Benutzer bietet - gerade in Verbund mit der beschriebenen Klettverschlussverbindung.

Die flexible Leiterplatte 16 ist mit der Decklage 15 verklebt. Die Decklage 15 ist insbesondere vorgesehen, um die auf der flexiblen Leiterplatte 16 verbauten elektrischen Elemente, wie beispielsweise den Taster 7 oder die elektrische Leitung 8, zu schützen, insbesondere vor Schmutz oder Beschädigung.

Die flexible Leiterplatte 16 mit darauf verklebter Decklage 15 ist mit dem Gehäuse 14 über mindestens eine, im Ausführungsbeispiel über drei, Schrauben 17 verschraubt. Durch diesen Aufbau sind Verschleißteile, beispielsweise flexible Leiterplatte 16 mit Decklage 15, Gehäuse 14, Display 5, etc. einfach austauschbar.

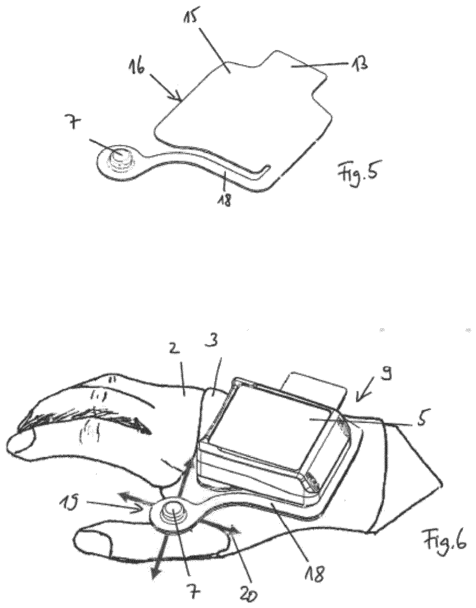

Fig. 5 zeigt die flexible Leiterplatte 16 mit verklebter Decklage 15 in einer Schrägansicht von oben, wobei in Draufsicht die flexible Leiterplatte 16 und die Decklage 15 etwa dieselbe Form aufweisen. Die flexible Leiterplatte 16 weist im Wesentlichen eine etwa rechteckförmige, im Ausführungsbeispiel etwa die Form eines Quadrats aufweisende, Form auf. Die Kantenlänge des Quadrats beträgt etwa 5 cm, wobei auch andere Kantenlängen im Bereich bis 10 cm, insbesondere bis 8 cm, vorteilhaft bis 6 cm, besonders vorteilhaft bis 4 cm und vorzugsweise bis 2 cm vorgesehen sein können. Die Kantenlänge beträgt mindestens etwa 1 cm, vorzugsweise mindestens etwa 3 cm, vorteilhaft mindestens etwa 4 cm. Selbstverständlich können im Fall eines Rechtecks anstelle eines Quadrats die Kantenlängen unterschiedlich sein, liegen aber im oben angegebenen Bereich.

Die Lasche 13 steht an einer Kante vom Quadrat bzw. Rechteck über und ist ihrerseits rechteckförmig ausgebildet. Die Kantenlänge des Rechtecks der Lasche 13 ist mit der Hauptfläche der flexiblen Leiterplatte 16 verbunden und beträgt etwa die Hälfte, vorzugsweise etwa ein Drittel der Kantenlänge der Hauptfläche. Die etwa senkrecht abstehende Kantenlänge des Rechtecks der Lasche 13 beträgt etwa ein Viertel, vorzugsweise etwa ein Fünftel der Kantenlänge der Hauptfläche.

Von einer Ecke der Hauptfläche der flexiblen Leiterplatte 16, im Ausführungsbeispiel an der in Arbeitsstellung 9 (Fig. 1) rechts hinten befindlichen Ecke, die von den Fingern entfernt liegt und die dem Daumen zugewandt ist, erstreckt sich die flexible Leiterplatte 16 mit einem Arm 18, wobei am Ende des Arms 18 der Taster 7 angeordnet ist. Der Arm 18 ist etwa höchstens 2 cm, vorzugsweise höchstens etwa 1 cm breit.

Der Arm 18 ist vorgesehen, damit der Taster 7 flexibel von der Grundposition des Displays 5 in die Arbeitsposition 20 verstellt werden kann, wie in Fig. 6 gezeigt. In Fig. 6 ist eine Sollposition 19 des Tasters 7 an der Hand gezeigt. Die Sollposition 19 liegt im Bereich des Handrückens. Der Taster 7 kann an eine Arbeitsposition 20 am Textilelement 3 befestigt werden. Die Arbeitsposition 20 ist schematisch in Fig. 6 gezeigt anhand von Pfeilen. Die Arbeitsposition 20 befindet sich in einem Umkreis von etwa +/- 8 mm, vorzugsweise +/- 12 mm, vorteilhaft +/- 4 mm von der Sollposition 19 auf dem Textilelement 3. Der Taster 7 ist in der Arbeitsposition 19 so an der Hand angeordnet ist, dass dieser mit mindestens einem Finger, insbesondere mit dem Daumen, derselben Hand bedienbar ist.

In einem weiteren Ausführungsbeispiel kann die flexible Leiterplatte 16 auch nicht-flexibel sein, wobei in diesem Fall mindestens der Arm 18 flexibel sein muss.

In einem weiteren Ausführungsbeispiel kann der Taster 7 auch über ein Kabel mit dem Steuergerät verbunden sein. Der Taster 7 ist in diesem Beispiel dann nicht auf der flexiblen Leiterplatte 16 angeordnet. Der Taster 7 lässt sich aber auch in diesem Ausführungsbeispiel flexibel anordnen und ist von Sollposition 19 zu Arbeitsposition 20 bewegbar. In diesem Ausführungsbeispiel ist zweckmäßig ein kleines Hakenband am Taster 7 angebracht, so dass der Taster 7 am Flauschband 11 befestigt werden kann.

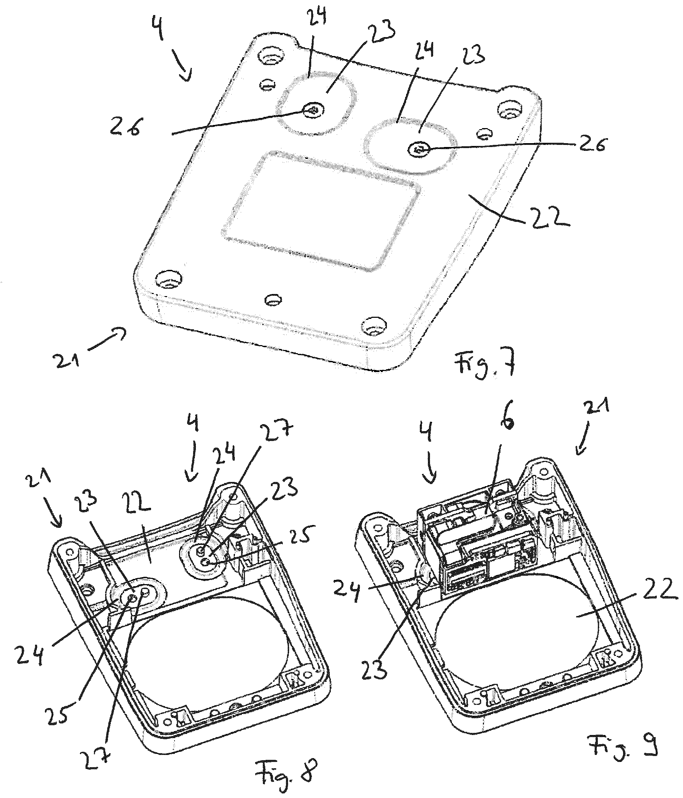

Fig. 7 bis 9 zeigen einen Teil eines bevorzugt aus Kunststoff gefertigten Gehäuses 21 der Elektronikeinheit 4. Präzisiert zeigen Fig. 7 bis 9 den unteren Teil des Gehäuses 21. Wie gut in Fig. 9 zu erkennen ist, umschließt das Gehäuse 21 einen Innenraum, in welchem die Leseeinheit 6 angeordnet ist. Das Gehäuse 21 umfasst einen Gehäuseboden, kurz Boden 22. Die Leseeinheit 6 ist an einer am Boden 22 des Gehäuses 21 angeordneten Anlagefläche 23 befestigt. Im Ausführungsbeispiel nach Fig. 7 bis 9 sind zwei Anlageflächen 23 vorgesehen. Die Anlageflächen 23, auch Auflageflächen genannt, sind über eine Wandung 24 integral mit dem Boden 22 verbunden, insbesondere einteilig ausgebildet.

Die Wandstärke der Wandung 24 ist dünner als die Wandstärke der benachbarten Anlagefläche 23 und dünner als die Wandstärke des benachbarten Bodens 22. Dies ermöglicht, dass die Anlagefläche 23 am Boden 22 schwimmend und/oder federnd gelagert ist.

Wie in den Figuren 7 und 8 sehr gut zu erkennen ist, umschließt die Wandung 24 die Auflagefläche 23 vollständig. Insbesondere umschließt die Wandung 24 die Auflagefläche ovalförmig, in einer weiteren Ausführungsform kann die Umschließung auch kreisförmig, elliptisch oder dergleichen sein, idealerweise ist sie verrundet, eckenlos, was die gewünschte Federwirkung verstärkt, da sich die durch die Wandung 24 gebildete Umschließung dann nach Art einer Rollmembran federnd bewegen kann.

In Fig. 7 ist angedeutet zu sehen, dass die Auflagefläche 23 von der Außenseite des Bodens 22 abgesetzt ist. Anders formuliert, liegen die Außenflächen des Bodens 22 und der Auflagefläche 23 nicht in einer Ebene. Insbesondere liegt die Außenfläche der Auflagefläche 23 in einer Ebene, die näher am Innenraum des Gehäuses 21 angeordnet ist als die Ebene der Außenfläche des Bodens 22. Die Außenseite des Bodens 22 ist hierbei die Seite, die auf der Außenseite des Gehäuses 21 angeordnet ist, also die Seite, die in Fig. 7 gut zu erkennen ist und die in den Fig. 8 und 9 nicht zu sehen ist, da sie hinter der Blattebene liegt.

Damit die schwimmende/gefederte Lagerung der Leseeinheit 6 ermöglicht ist, ist zwischen der Leseeinheit 6 und dem Boden 22 ein Abstand vorgesehen, wie er in Fig. 9 angedeutet ist. Die an der Anlagefläche 23 fest verbundene Leseeinheit 6 ist somit berührungslos zum Boden 22 gelagert und nur über die Wandung 24 mit dem Boden 22 wirkverbunden. Zwischen Boden 22 und Leseeinheit 6 ist ein Abstand von etwa 0,2 mm vorgesehen, wobei es zweckmäßig sein kann, dass der Abstand mindestens etwa 0,1 mm und insbesondere höchstens etwa 1 mm beträgt, bevorzugt höchstens etwa 0,5 mm.

In der Auflagefläche 23 ist eine in Fig. 8 gezeigte Bohrung 25 vorgesehen. Die Bohrung 25 verbindet die Außenseite des Gehäuses 21 mit der Innenseite des Gehäuses 21. Also verbindet die Bohrung 25 den Innenraum des Gehäuses 21 mit dem Außenraum des Gehäuses 21. Die Leseeinheit 6 ist mittels einer durch die Bohrung 25 geführten, in Fig. 7 gezeigten Befestigungsschraube 26 an der Auflagefläche 23 fest verschraubt. Bevorzugt ist eine Inbusschraube als Befestigungsschraube 26 vorgesehen. Die Auflagefläche 23 weist einen in den Innenraum des Gehäuses 21 ragenden, in Fig. 8 gezeigten Positionierungsstift 27 auf. Der Positionierungsstift 27 ist im Ausführungsbeispiel als Passstift ausgeführt. Der Positionierungsstift 27 positioniert die Leseeinheit 6 an der Auflagefläche 23 und dient damit im Wesentlichen dem sehr exakten und schnellen Ausrichten der Leseeinheit 6 bei der Montage der Elektronikeinheit 4. Dies ist insbesondere nützlich, da die Elektronikeinheit eine Wasserschutzklasse von IP 65 oder besser aufweist.

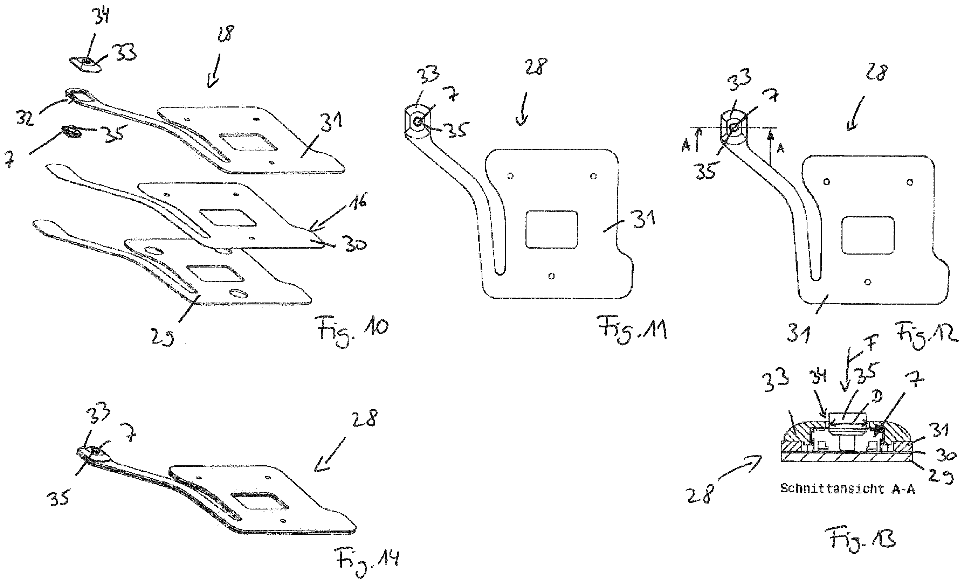

Die Elektronikeinheit 4 umfasst ein mindestens dreilagiges, in den Fig. 10 bis 14 dargestelltes Tasterpad 28. Eine untere Lage 29 des Tasterpads 28 umfasst das Hakenband 12. Eine mittlere Lage 30 des Tasterpads 28 umfasst eine flexible Leiterplatte 16. In einer weiteren Ausgestaltung der Erfindung entspricht die mittlere Lage 30 der Leiterplatte 16, ist also einteilig ausgebildet. In einer weiteren Ausgestaltung der Erfindung kann die mittlere Lage 30 auch als Trägerlage für die Leiterplatte 16 ausgebildet sein, wobei hier zweckmäßig die Leiterplatte 16 und mittlere Lage 30 fest miteinander verbunden sind. Die Leiterplatte 16, respektive die mittlere Lage 30 sind elektrisch an den Trigger 7 angeschlossen. Eine obere Lage, insbesondere Decklage 31, des Tasterpads 28 schließt das Tasterpad 28 ab, wobei die mittlere Lage 30 zwischen der unteren Lage 29 und der Decklage 31 angeordnet ist.

Die obere Lage umfasst eine in Fig. 10 gezeigte, meist fensterartige Aussparung 32 für den Trigger 7. Dabei ist über der Aussparung 32 der oberen Lage zumeist eine Kappe 33 in Form einer gehäuseartigen Vertiefung angeordnet, wie gut in Fig. 10 und vor allem in Fig. 13 erkennbar ist. Der Großteil des Triggers 7 ist in der Kappe 33 angeordnet, insbesondere ist der Trigger 7 mindestens von der unteren Lage 29, der oberen Lage und der Kappe 33 mindestens teilweise umschlossen. Somit schützt die Kappe 33 den Trigger 7, insbesondere vor mechanischen Einwirkungen. Hierzu ist die Kappe 33 zweckmäßig massiv ausgeführt, also einteilig und aus einem festen, harten Kunststoff.

Damit der Trigger 7 vom Bediener bedienbar ist, weist die Kappe 33 eine, insbesondere zentrale, auf der der oberen Lage abgewandten Außenseite der Kappe 33 angeordnete, in Fig. 10 und 13 dargestellte Bohrung 34 auf. Aus der Bohrung 34 ragt in zusammengebautem Zustand des Pads 28 ein Taster 35 des Triggers 7, so dass der Benutzer 2 den Taster 35 des Triggers 7 betätigen kann. Das Ausragen ist gut in den Fig. 13 und 14 zu erkennen.

Im Ausführungsbeispiel ist die Kappe 7 mit der oberen Lage verklebt. Im Ausführungsbeispiel ist außerdem die untere Lage 29 mit der mittleren Lage 30 und die mittlere Lage 30 mit der oberen Lage verklebt. Alternativ kann natürlich auch eine andere Verbindungsform gewählt werden, beispielsweise vernähen, verschweißen oder dergleichen. Im Ausführungsbeispiel ist oder besteht der Klebstoff zu wesentlichen Teilen aus Cyanacrylat, insbesondere Ethyl-Cyanacrylat. Ideal ist die Verwendung eines Klebstoffs des Typs LOCTITE^{®} 480^{™}. Sämtliche technischen, insbesondere physikalische und chemische, Daten des Klebstoffs nach dem Typ LOCTITE^{®} 480^{™} sind Bestandteil dieses Ausführungsbeispiels. Dieser Klebstoff hat sich aufgrund seiner charakteristischen chemischen und physikalischen Eigenschaften sowohl bei der Herstellung des Pads 28 als auch bei der Dauerhaltbarkeit des hergestellten Pads 28 als sehr vorteilhaft erwiesen.

Zur Betätigung des Triggers 7 eine in Fig. 13 angedeutete Betätigungskraft F von nicht mehr als etwa 10 N, insbesondere nicht mehr als etwa 5 N, besonders vorteilhaft von nicht mehr als etwa 3,5 N erforderlich, entsprechend ist der Trigger gestaltet. Der Trigger 7 zeichnet sich außerdem dadurch aus, dass der Trigger 7, insbesondere der Taster 35, mindestens etwa 10 000 Mal, insbesondere mindestens etwa 100 000 Mal, bevorzugt mindestens etwa 1 000 000 Mal, besonders bevorzugt mindestens etwa 2 000 000 Mal ohne zwischenzeitlich wesentliche Funktionseinbuße betätigbar ist.

Im Ausführungsbeispiel weist der Trigger 7, insbesondere der Taster 35, einen Tastenhub von höchstens etwa 1 mm, bevorzugt von höchstens etwa 0,5 mm, besonders bevorzugt von höchstens etwa 0,3 mm auf. Mit Tastenhub ist die Bewegung gemeint, die etwa parallel zur in Fig. 13 gezeigten Betätigungskraft F verläuft. Tastenhub ist hierbei die maximale Distanz, die der Taster 35 beim Drücken durch den Benutzer bewegbar ist. Der Taster 35 löst dann auch entsprechend nach Verfahren des Tasters 35 um den Tastenhub ein elektrisches Signal aus. Der Taster 35 ist in Form eines, insbesondere runden, Betätigungsknopfes ausgeführt, wie gut in Fig. 13 und 14 zu sehen ist. Der Taster 35 weist einen Durchmesser D von höchstens etwa 6 mm, bevorzugt von höchstens etwa 5 mm, besonders bevorzugt von höchstens etwa 4 mm auf. Im Ausführungsbeispiel ist der Trigger 7 entsprechend der Bauart einer der Typen Panasonic EVQP0, EVQQ2, EVQ6Q2 oder EVQ7Q2 ausgeführt. Sämtliche technischen Daten des Triggers nach einem der Typen Panasonic EVQP0, EVQQ2, EVQ6Q2 oder EVQ7Q2 sind Bestandteil dieses Ausführungsbeispiels.

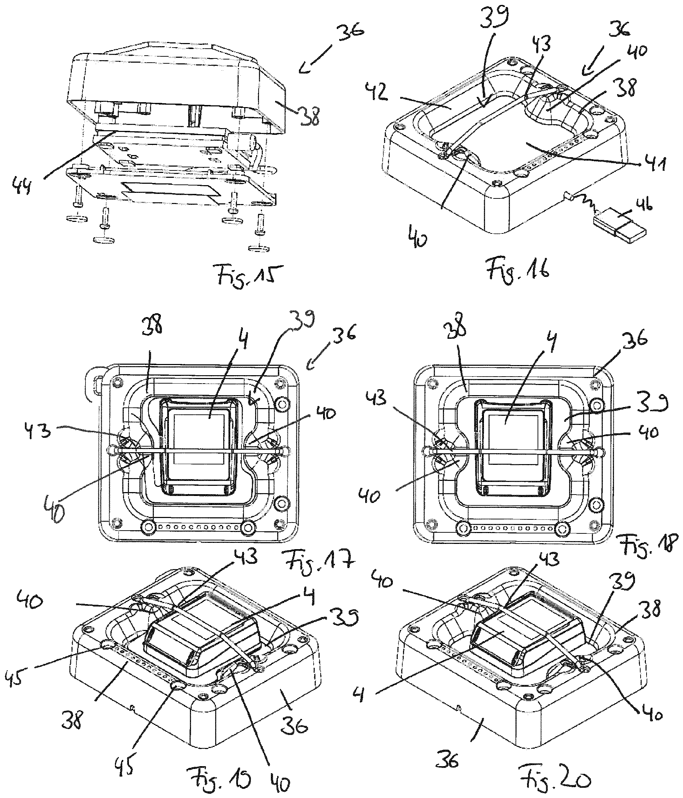

Die Fig. 15 bis 22 zeigen eine Ladestation 36, 37 für die Elektronikeinheit 4 und/oder für die Elektronikeinheit 4 des elektronischen Kleidungsstücks 1. Die Ladestation wird nicht durch die Erfindung beansprucht. Die Ladestation 36, 37 umfasst ein Ladegehäuse 38, wobei das Ladegehäuse 38 eine Lademulde 39 umfasst, welche zur Aufnahme der Elektronikeinheit 4 vorgesehen ist.

Das Ladegehäuse 38 weist mindestens einen Zentriervorsprung 40 zum Positionieren der Elektronikeinheit 4 in der Lademulde 39 auf. Im Ausführungsbeispiel sind zwei Zentriervorsprünge 40 vorgesehen. Die beiden Zentriervorsprünge 40 liegen diametral gegenüber und stoßen bei eingelegter Elektronikeinheit 4 an die Außenwände des Gehäuses der Elektronikeinheit 4. Die Zentriervorsprünge 40 ragen in die Lademulde 39. Die Zentriervorsprünge 40 sind nasenförmig ausgebildet, wie gut in Fig. 16 zu erkennen ist. Die durch diese Zentriervorsprünge geschaffenen Freiräume ermöglichen das schnelle und sichere "Pick-Up" der geladenen Elektronikeinheit 4.

Die Lademulde 39 umfasst einen Ladeboden 41 und Ladewände 42. Die Zentriervorsprünge 40 sind an einer, im Ausführungsbeispiel an zwei, insbesondere gegenüberliegenden Ladewänden 42 angeordnet. Die Ladewände 42 verlaufen schräg in der Art, dass der Abstand der Ladewände 42 zueinander in Richtung auf den Ladeboden 41 abnimmt. Dadurch kann der Benutzer die Elektronikeinheit relativ einfach in die Lademulde 39 stellen, wobei beim Einlegen und damit bei Annäherung der Elektronikeinheit in Richtung auf den Ladeboden 41 die Elektronikeinheit 4 automatisch auf die Ladestation 36 zentriert wird.

Die Ladestation 36 umfasst eine Befestigungsvorrichtung 43 zum Befestigen der Elektronikeinheit 4.

Die Befestigungsvorrichtung 43 kann als nicht in den Figuren dargestellter Bügel, insbesondere Klappbügel, ausgeführt sein. Im Ausführungsbeispiel ist die Befestigungsvorrichtung als Spanngurt, insbesondere Gummiband, Federandruckspange oder dergleichen ausgebildet.

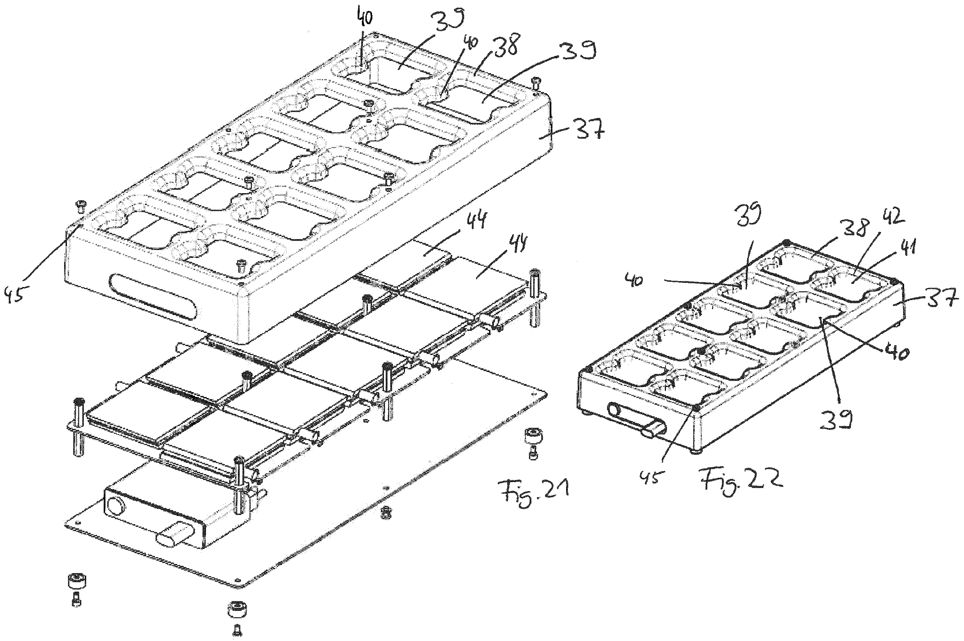

Die Ladestation 36, 37 umfasst Vorrichtungen 44 zum induktiven Laden der Elektronikeinheit 4, vgl. Fig. 15 und 21. Die Vorrichtungen 44 sind zweckmäßigerweise unterhalb des Ladebodens 41 im Inneren des Gehäuses der Ladestation 36 angeordnet.

Die Ladestation 36, 37 umfasst mindestens eine Verbindungsvorrichtung 45, mit welcher sich die Ladestation 36 mit einer, insbesondere baugleichen, zweiten Ladestation 36 verbinden, insbesondere fest verbinden, lässt. In einer sehr einfachen Ausführungsform gestaltet sich eine solche Verbindungsvorrichtung 45 als einfache Bohrung, als Schlaufe oder dergleichen, an welcher ein Befestigungsmittel wie beispielsweise Schraube, Nagel, Draht oder dergleichen befestigt werden kann.

Im Gegensatz zum Ausführungsbeispiel nach den Fig. 15 bis 20, in welcher nur eine Lademulde 39 pro Ladestation 36 vorgesehen ist, sind im Ausführungsbeispiel nach den Fig. 21 und 22 mehrere Lademulden 39 pro Ladestation 37 vorgesehen. Im Ausführungsbeispiel nach den Fig. 21 und 22 sind 10 Lademulden 39 pro Ladestation 37 vorgesehen. Es kann zweckmäßig sein, insbesondere mindestens etwa 2, bevorzugt mindestens etwa 6, besonders bevorzugt mindestens etwa 10 und insbesondere höchstens 50, bevorzugt höchstens etwa 20, besonders bevorzugt höchstens etwa 16 Lademulden 39 pro Ladestation 37 vorzusehen.

Die Ladestation 36, 37 lässt sich zweckmäßig über eine in Fig. 16 gezeigte USB Ladebuchse 46 mit Strom versorgen. Anstelle einer USB Ladebuchse kann selbstverständlich auch eine andere Stromversorgung vorgesehen sein.

Die Leseeinheit 6 umfasst eine Fotozelleneinheit und eine Scaneinheit, wobei die Scaneinheit zum Scannen der Umgebung, insbesondere des Codes, vorgesehen ist, und wobei die Fotozelleneinheit den Code zur elektronischen Weiterverarbeitung abfotografiert.

Die Erfindung umfasst ein in den Figuren gezeigtes Textilelement 3, insbesondere Handschuh, Handüberzieher, Armstulpe oder dergleichen, mit einem am Textilelement 3 fest verbundenen ersten Klettverschlusselement, vorzugsweise in Form eines Flauschbandes 11, wobei am Textilelement 3 eine Elektronikeinheit 4 über ein an der Elektronikeinheit 4 angebrachtes zweites Klettverschlussteil, vorzugsweise in Gestalt eines Hakenbandes 12, verbindbar ist, wobei in einer Arbeitsstellung 9 das Hakenband 12 mit dem Flauschband 11 fest verbindbar und dadurch die Elektronikeinheit 4 fest mit dem Textilelement 3 verbindbar ist, und wobei in einer Pausenstellung 10 das Hakenband 12 vom Flauschband 11 lösbar und wodurch die Elektronikeinheit 4 vom Textilelement 3 trennbar ist, und wobei die Elektronikeinheit 4 insbesondere eine Leseeinheit 6 zum Auslesen eines Codes umfasst, wobei die Elektronikeinheit 4 insbesondere einen Trigger 7 umfasst, wobei der Trigger 7 insbesondere über eine elektrische Leitung 8 mit der Leseeinheit 6 elektrisch verbunden ist, und wobei bei Betätigung des Triggers 7 insbesondere die Leseeinheit 6 zum Auslesen des Codes startet.

Als Ausführungsbeispiel ist ein Verfahren zum Auslesen eines an einem Bauteil angebrachten Codes mit einem elektronischen Kleidungsstück 1 nach einem der Ansprüche 7 bis 11 **vorgesehen,** welches die folgenden Verfahrensschritten umfasst:
a) Anziehen des Textilelements 3 durch einen Benutzer,
b) Verbinden der Elektronikeinheit 4 mit dem Textilelement 3, insbesondere festes Verbinden des ersten mit dem zweiten Klettverschlussteil, so dass das elektronische Kleidungsstück 1 in der Arbeitsstellung 9 vom Benutzer verwendbar ist,
c) Auslesen des mindestens einen Auslesecodes des mindestens einen Bauteils, wobei der Benutzer den Trigger 7 betätigt und dadurch die Leseeinheit 6 den Code ausliest,
d) gegebenenfalls einfache oder mehrfache Wiederholung des Verfahrensschrittes c), insbesondere beim Scannen von Codes von mehreren Bauteilen,
e) Lösen der Elektronikeinheit 4 vom Textilelement 3, so dass in der Pausenstellung 10 der Benutzer, insbesondere ohne Elektronikeinheit 4, arbeitsfähig ist.

Es kann zweckmäßig sein, dass nach dem Arbeitsschritt e) der Benutzer die Arbeitsschritte b) bis e) wiederholt.

Es kann zweckmäßig sein, dass der Benutzer nach dem Arbeitsschritt e) die Elektronikeinheit 4 zum Laden der Elektronikeinheit 4 in der Ladestation 36, 37 ablegt.

Zweckmäßig ist der Touchscreen schwimmend auf einer vorzugsweise mit Acrylat getränkten vorzugsweise Gummidichtung aus vorzugsweise Schaum gelagert. Damit ist der Touchscreen stoßunempfindlich.

Zweckmäßig ist die Elektronikeinheit 4 so verschaltet, dass beispielsweise ein Industriecomputer, beispielsweise im Lager, oder ein Mobiltelefon oder anderes tragbares, leistungsfähiges Gerät des Benutzers als eine Art Relais-Station genutzt wird. Dieses Gerät hat zweckmäßigerweise Zugriff auf ein Warenwirtschaftssystem. Auf diese Art und Weise muss in der Elektronikeinheit 4 keine besonders leistungsfähige Recheneinheit installiert sein. Meist reicht dann, neben den Kommunikationsmodulen, lediglich ein Anzeigegerät mit kleiner Recheneinheit. Die Rechenleistung wird vom Gerät, also Mobiltelefon oder Industriecomputer oder dergleichen, übernommen, das die Befehle des Zentralrechners weiterleitet. Zweckmäßigerweise kann der Benutzer über den Touchscreen eingeben, dass der Benutzer sich am betreffenden Lagerplatz aufhält, zu dem er geschickt wurde. Der Benutzer kann auch eingeben, ob er die Ware aufgenommen hat oder wie viel Ware er gefunden hat, beispielsweise 5 Stück Ware statt der angeforderten 10 Stück Ware. Selbstverständlich kann der Benutzer die Ware auch über die Leseeinheit 6 scannen.

Die Elektronikeinheit 4 ist intern mit einem SIPO-Akku ausgestattet. Dieser Akku dehnt sich beim Laden um bis zu 10 % im Volumen aus. Für ihn ist daher im Gehäuse ein entsprechend dimensionierter Aufnahmeraum vorgesehen, der den Akku zwar klapperfrei hält, aber seine sich beim Laden einstellende Volumenausdehnung nicht oder nicht wesentlich behindert. Oft ist es sinnvoll, wenn das Klappern des Akkus im Aufnahmeraum beispielsweise durch Miteinlegen einer kompressiblen Matte, etwa aus Schaumstoff, in den Aufnahmeraum unterbunden wird.

Der Akku hält etwa 500 Ladezyklen. Zum Austausch des Akkus kann das Gehäuse der Elektronikeinheit 4 geöffnet werden. Zweckmäßig sind die elektrischen Anschlüsse des Akkus mit Steckverbindern versehen. Es kann auch zweckmäßig sein, dass die elektrischen Anschlüsse des Akkus verlötbar sind.

Die Elektronikeinheit 4 entspricht mindestens Schutzklasse IP 65.

## Patentansprüche

1. Elektronikeinheit (4) mit einer Leseeinheit (6) zum Auslesen eines Codes, wobei die Elektronikeinheit (4) ein zweites Klettverschlussteil umfasst, wobei das zweite Klettverschlussteil über ein an einem Textilelement (3) fest verbundenes erstes Klettverschlusselement verbindbar ist, so dass in einer Arbeitsstellung (9) das zweite Klettverschlussteil mit dem ersten Klettverschlusselement fest verbindbar und dadurch die Elektronikeinheit (4) fest mit dem Textilelement (3) verbindbar ist, und wobei in einer Pausenstellung (10) das zweite Klettverschlussteil vom ersten Klettverschlusselement lösbar und dadurch die Elektronikeinheit (4) vom Textilelement (3) trennbar ist, **dadurch gekennzeichnet, dass** in der Arbeitsstellung (9) beim Tragen des Textilelements (3) die Elektronikeinheit (4) im Bereich des Handrückens eines Benutzers (2) anordenbar ist, dass die Elektronikeinheit (4) einen Trigger (7) umfasst, wobei der Trigger (7) über eine elektrische Leitung (8) mit der Leseeinheit (6) elektrisch verbunden ist, wobei bei Betätigung des Triggers (7) die Leseeinheit (6) zum Auslesen des Codes startet, und wobei der Trigger (7) in der Arbeitsstellung (9) in einem Bereich anordenbar ist, an welchem der Benutzer (2) den Trigger (7) mit dem Daumen der Hand betätigen kann, auf welcher der Benutzer (2) das elektronische Kleidungsstück trägt.

2. Elektronikeinheit (4) nach Anspruch 1, **dadurch gekennzeichnet, dass** die Elektronikeinheit (4) ein Gehäuse (21) umfasst, und wobei das Gehäuse (21) einen Boden (22) umfasst, und wobei die Leseeinheit (6) an einer am Boden (22) des Gehäuses (21) angeordneten Anlagefläche (23) fest verbunden ist, und wobei die Anlagefläche (23) am Boden (22) schwimmend und/oder federnd gelagert ist.

3. Elektronikeinheit (4) nach Anspruch 2, **dadurch gekennzeichnet, dass** Boden (22) und Auflagefläche (23) über eine Wandung (24) verbunden sind, wobei die Wandstärke der Wandung (24) dünner ist als die Wandstärke des Bodens (22) und dünner ist als die Wandstärke der Auflagefläche (23), so dass die Wandung (24) die schwimmende und/oder federnde Lagerung der Auflagefläche (23) am Boden (22) ermöglicht.

4. Elektronikeinheit (4) nach Anspruch 2 oder 3, **dadurch gekennzeichnet, dass** die an der Anlagefläche (23) fest verbundene Leseeinheit (6) berührungslos zum Boden (22) gelagert ist, wobei zwischen Boden (22) und Leseeinheit (6) ein Abstand vorgesehen ist.

5. Elektronikeinheit (4) nach einem der Ansprüche 2 bis 4, **dadurch gekennzeichnet, dass** die Elektronikeinheit (4) ein mindestens dreilagiges Tasterpad (28) umfasst, wobei eine untere Lage (29) des Tasterpads (28) das Hakenband (12) umfasst, wobei eine mittlere Lage (30) des Tasterpads (28) eine flexible Leiterplatte (16) umfasst, die elektrisch an den Trigger (7) angeschlossen ist, wobei eine obere Lage, insbesondere Decklage (31), des Tasterpads (28) das Tasterpad (28) abschließt, wobei die mittlere Lage (30) zwischen der unteren Lage (29) und der oberen Lage angeordnet ist.

6. Elektronikeinheit (4) nach Anspruch 5, **dadurch gekennzeichnet, dass** die obere Lage eine Aussparung (32) für den Trigger (7) umfasst, wobei über der Aussparung (32) der oberen Lage eine Kappe (33) in Form einer gehäuseartigen Vertiefung angeordnet ist, und dass der Trigger (7) in der Kappe (33) angeordnet ist.

7. Elektronisches Kleidungsstück (1), welches von einem Benutzer (2) tragbar ist, mit einem Textilelement (3) und mit einem am Textilelement (3) fest verbundenen ersten Klettverschlusselement und mit einer Elektronikeinheit (4) nach einem der Ansprüche 1 bis 6, wobei in einer Arbeitsstellung (9) das zweite Klettverschlussteil mit dem ersten Klettverschlusselement fest verbunden und dadurch die Elektronikeinheit (4) fest mit dem Textilelement (3) verbunden ist, wobei in einer Pausenstellung (10) das zweite Klettverschlussteil vom ersten Klettverschlusselement gelöst und dadurch die Elektronikeinheit (4) vom Textilelement (3) getrennt ist, **dadurch gekennzeichnet, dass** in der Arbeitsstellung (9) beim Tragen des Textilelements (3) die Elektronikeinheit (4) im Bereich des Handrückens des Benutzers (2) angeordnet ist, und wobei der Trigger (7) in der Arbeitsstellung (9) in einem Bereich angeordnet ist, an welchem der Benutzer (2) den Trigger (7) mit dem Daumen der Hand betätigen kann, auf welcher der Benutzer (2) das elektronische Kleidungsstück trägt.

8. Elektronisches Kleidungsstück (1) nach Anspruch 7, **dadurch gekennzeichnet, dass** beim Tragen des Textilelements (3) an einer Hand eines Benutzers (2) das Flauschband (11) etwa im Bereich des Handrückens angeordnet ist.

9. Elektronisches Kleidungsstück (1) nach Anspruch 7 oder 8, **dadurch gekennzeichnet, dass** der Trigger (7) in einer Sollposition (19) im Bereich des Handrückens angeordnet ist.

10. Elektronisches Kleidungsstück (1) nach Anspruch 9, **dadurch gekennzeichnet, dass** der Trigger (7) vom Benutzer (2) selbst werkzeuglos in unterschiedlichen Arbeitspositionen (20) am Textilelement (3) befestigbar ist.

11. Elektronisches Kleidungsstück (1) nach einem der vorhergehenden Ansprüche 7 bis 10, **dadurch gekennzeichnet, dass** der Trigger (7) in der Arbeitsposition (20) an der Hand so angeordnet ist, dass dieser mit mindestens einem Finger derselben Hand bedienbar ist.

12. Verfahren zum Auslesen eines an einem Bauteil angebrachten Codes mit einem elektronischen Kleidungsstück (1) nach einem der Ansprüche 7 bis 11, mit den folgenden Verfahrensschritten:
a) Anziehen des Textilelements (3) durch einen Benutzer (2),
b) Verbinden der Elektronikeinheit (4) mit dem Textilelement (3), so dass das elektronische Kleidungsstück (1) in der Arbeitsstellung (9) vom Benutzer (2) verwendbar ist,
c) Auslesen des mindestens einen Auslesecodes des mindestens einen Bauteils, wobei der Benutzer (2) den Trigger (7) betätigt und dadurch die Leseeinheit (6) den Code ausliest,
d) gegebenenfalls einfache oder mehrfache Wiederholung des Verfahrensschrittes c),
e) Lösen der Elektronikeinheit (4) vom Textilelement (3), so dass in der Pausenstellung (10) der Benutzer (2) arbeitsfähig ist.

## Claims

1. An electronic unit (4) comprising a reading unit (6) for reading a code, wherein the electronic unit (4) comprises a second hook-and-loop fastener part, wherein the second hook-and-loop fastener part can be connected via a first hook-and-loop fastener member which is firmly connected to a textile element (3) so that, in a working position (9), the second hook-and-loop fastener part can be firmly connected to the first hook-and-loop fastener member and thus, the electronic unit (4) can be firmly connected to the textile element (3), and wherein, in a pause position (10), the second hook-and-loop fastener part can be detached from the first hook-and-loop fastener member and thus, the electronic unit (4) can be separated from the textile element (3), **characterized in that**, in the working position (9), when the textile element (3) is worn, the electronic unit (4) can be disposed in the region of the back of the hand of a user (2), that the electronic unit (4) comprises a trigger (7), wherein the trigger (7) is electrically connected to the reading unit (6) via an electric line (8), wherein, for reading the code, the reading unit (6) starts upon actuation of the trigger (7), and wherein, in the working position (9), the trigger (7) can be disposed in a region where the user (2) can operate the trigger (7) with the thumb of the hand on which the user (2) is wearing the electronic garment.

2. The electronic unit (4) according to claim 1, **characterized in that** the electronic unit (4) comprises a housing (21), and wherein the housing (21) comprises a bottom (22), and wherein the reading unit (6) is firmly connected to a contact surface (23) disposed on the bottom (22) of the housing (21), and wherein the contact surface (23) is mounted on the bottom (22) in a floating and/or resilient manner.

3. The electronic unit (4) according to claim 2, **characterized in that** the bottom (22) and the support surface (23) are connected via a wall (24), wherein the wall thickness of the wall (24) is thinner than the wall thickness of the bottom (22), and thinner than the wall thickness of the support surface (23), so that the wall (24) enables the floating and/or resilient mounting of the support surface (23) on the bottom (22).

4. The electronic unit (4) according to claim 2 or 3, **characterized in that** the reading unit (6) firmly connected to the contact surface (23) is mounted without any contact with the bottom, wherein a distance is provided between the bottom (22) and the reading unit (6).

5. The electronic unit (4) according to one of claims 2 to 4, **characterized in that** the electronic unit (4) comprises an at least triple-layered button pad (28), wherein a lower layer (29) of the button pad (28) comprises the hook strip (12), wherein a middle layer (30) of the button pad (28) comprises a flexible circuit board (16) electrically connected to the trigger (7), wherein an upper layer, in particular a top layer (31), of the button pad (28) seals the button pad (28), wherein the middle layer (30) is disposed between the lower layer (29) and the upper layer.

6. The electronic unit (4) according to claim 5, **characterized in that** the upper layer comprises a cut-out (32) for the trigger (7), wherein a cap (33) in the shape of a housing-like depression is disposed above the cut-out (32) of the upper layer, and that the trigger (7) is disposed in the cap (33).

7. An electronic garment (1) which can be worn by a user (2), comprising a textile element (3) and a first hook-and-loop fastener member firmly connected to the textile element (3) and an electronic unit (4) according to one of claims 1 to 6, wherein, in a working position (9), the second hook-and-loop fastener part is firmly connected to the first hook-and-loop fastener member and thus, the electronic unit (4) is firmly connected to the textile element (3), wherein, in a pause position (10), the second hook-and-loop fastener part is detached from the first hook-and-loop fastener member and thus, the electronic unit (4) is separated from the textile element (3), **characterized in that**, in the working position (9), when the textile element (3) is worn, the electronic unit (4) is disposed in the region of the back of the hand of a user (2), and wherein, in the working position (9), the trigger (7) is disposed in a region where the user (2) can operate the trigger (7) with the thumb of the hand on which the user (2) is wearing the electronic garment.

8. The electronic garment (1) according to claim 7, **characterized in that**, when the textile element (3) is worn on a hand of a user (2), the loop strip (11) is disposed approximately in the region of the back of the hand.

9. The electronic garment (1) according to claim 7 or 8, **characterized in that** the trigger (7) is disposed at a target position (19) in the region of the back of a hand.

10. The electronic garment (1) according to claim 9, **characterized in that** the trigger (7) can be attached at different operating positions (20) on the textile element (3) without any tools by the user (2) himself.

11. The electronic garment (1) according to one of the preceding claims 7 to 10, **characterized in that** the trigger (7), in the operating position (20), is disposed on the hand in such a way that the trigger can be operated with at least one finger of the same hand.

12. A method for reading a code attached to a component by means of an electronic garment (1) according to one of claims 7 to 11, comprising the following method steps:
a) donning the textile element (3) by a user (2),
b) connecting the electronic unit (4) to the textile element (3), so that the electronic garment (1) can be used in the working position (9) by the user (2),
c) reading the at least one reading code of the at least one component, wherein the user (2) actuates the trigger (7) and thus, the reading unit (6) reads the code,
d) if necessary, repeating the method step c) once or several times,
e) detaching the electronic unit (4) from the textile element (3), so that, in the pause position (10), the user (2) is capable of working.

## Revendications

1. Unité électronique (4) comprenant une unité de lecture (6) pour lire un code, l'unité électronique (4) comprenant une deuxième partie d'une fermeture auto-agrippante, la deuxième partie de la fermeture auto-agrippante pouvant être reliée par l'intermédiaire d'un premier élément de la fermeture auto-agrippante qui est solidement relié à un élément textile (3) de sorte que, dans une position de travail (9), la deuxième partie de la fermeture auto-agrippante peut être solidement reliée au premier élément de la fermeture auto-agrippante et ainsi, l'unité électronique (4) peut être solidement reliée à l'élément textile (3), et, dans une position de pause (10), la deuxième partie de la fermeture auto-agrippante peut être détachée du premier élément de la fermeture auto-agrippante et ainsi, l'unité électronique (4) peut être séparée de l'élément textile (3), **caractérisé en ce que**, en position de travail (9), lorsque l'élément textile (3) est porté, l'unité électronique (4) peut être disposée dans la région du dos de la main d'un utilisateur (2), **en ce que** l'unité électronique (4) comprend un déclencheur (7), le déclencheur (7) étant relié électriquement à l'unité de lecture (6) via une ligne électrique (8), et, pour lire le code, l'unité de lecture (6) démarrant lors de l'actionnement du déclencheur (7) et, en position de travail (9), le déclencheur (7) pouvant être disposé dans une région où l'utilisateur (2) peut actionner le déclencheur (7) avec le pouce de la main sur laquelle l'utilisateur (2) porte le vêtement électronique.

2. L'unité électronique (4) selon la revendication 1, **caractérisée en ce que** l'unité électronique (4) comprend un boîtier (21), le boîtier (21) comprenant un fond (22), et l'unité de lecture (6 ) étant solidement reliée à une surface de contact (23) disposée sur le fond (22) du boîtier (21), et la surface de contact (23) étant montée de manière flottante et/ou élastique sur le fond (22).

3. L'unité électronique (4) selon la revendication 2, **caractérisée en ce que** le fond (22) et la surface de contact (23) sont reliés par une paroi (24), l'épaisseur de la paroi (24) étant plus mince que l'épaisseur de paroi du fond (22), et plus mince que l'épaisseur de paroi de la surface de contact (23), de sorte que la paroi (24) permet le montage flottant et/ou élastique de la surface de contact (23) sur le fond ( 22).

4. L'unité électronique (4) selon l'une des revendications 2 ou 3, **caractérisée en ce que** l'unité de lecture (6) qui est solidement reliée à la surface de contact (23) est montée de manière à ne pas toucher le fond, une distance étant prévue entre le fond (22) et l'unité de lecture (6).

5. L'unité électronique (4) selon l'une des revendications 2 à 4, **caractérisée en ce que** l'unité électronique (4) comprend un support de bouton-poussoir (28) au moins à triple couche, une couche inférieure (29) du support de bouton-poussoir (28) comprenant la bande à crochets (12), une couche intermédiaire (30) du support de bouton-poussoir (28) comprenant une carte de circuit imprimé flexible (16) qui est connectée électriquement au déclencheur (7), une couche supérieure, en particulier une couche extérieure (31) du support de bouton-poussoir (28) scelle le support de bouton-poussoir (28), la couche intermédiaire (30) étant disposée entre la couche inférieure (29) et la couche supérieure.

6. L'unité électronique (4) selon la revendication 5, **caractérisée en ce que** la couche supérieure comprend un évidement (32) pour le déclencheur (7), un capuchon (33) sous la forme d'une cavité en forme d'un boîtier étant disposé au-dessus de l'évidement (32) de la couche supérieure, et que le déclencheur (7) étant disposé dans le capuchon (33).

7. Vêtement électronique (1) qui peut être porté par un utilisateur (2), comprenant un élément textile (3) et un premier élément de la fermeture auto-agrippante qui est solidairement relié à l'élément textile (3) et une unité électronique (4) selon l'une des revendications 1 à 6, et, dans une position de travail (9), la deuxième partie de la fermeture auto-agrippante étant solidement reliée au premier élément de la fermeture auto-agrippante et ainsi, l'unité électronique (4) étant solidement reliée à l'élément textile (3), et, dans une position de pause (10), la deuxième partie de la fermeture auto-agrippante étant détachée du premier élément de la fermeture auto-agrippante et ainsi, l'unité électronique (4) étant séparée de l'élément textile (3), **caractérisé en ce que**, en position de travail (9), lorsque l'élément textile (3) est porté, l'unité électronique (4) est disposée dans la région du dos de la main de l'utilisateur (2), et, en position de travail (9), le déclencheur (7) étant disposé dans une région où l'utilisateur (2) peut actionner le déclencheur (7) avec le pouce de la main sur laquelle l'utilisateur (2) porte le vêtement électronique.

8. Le vêtement électronique (1) selon la revendication 7, **caractérisé en ce que**, lorsque l'élément textile (3) est porté sur une main d'un utilisateur (2), le ruban-velours (11) est disposé sensiblement dans la région du dos de la main.

9. Le vêtement électronique (1) selon l'une des revendications 7 ou 8, **caractérisé en ce que** le déclencheur (7) est disposé à une position cible (19) dans la région du dos d'une main.

10. Le vêtement électronique (1) selon la revendication 9, **caractérisé en ce que** le déclencheur (7) peut être fixé par l'utilisateur (2) lui-même, sans aucun outil, à différentes positions de fonctionnement (20) sur l'élément textile.

11. Le vêtement électronique (1) selon l'une des revendications précédentes 7 à 10, **caractérisé en ce que** le déclencheur (7), en position de fonctionnement (20), est disposé sur la main d'un utilisateur de manière à pouvoir être actionné avec au moins un doigt de la même main.

12. Procédé de lecture d'un code attaché à un composant au moyen d'un vêtement électronique (1) selon l'une des revendications 7 à 11, comprenant les étapes de procédé suivantes :
a) habillage de l'élément textile (3) par un utilisateur (2),
b) relier l'unité électronique (4) à l'élément textile (3), de sorte que le vêtement électronique (1) puisse être utilisé en position de travail (9) par l'utilisateur (2),
c) lire le au moins un code de lecture du au moins un composant, l'utilisateur (2) actionnant le déclencheur (7) et ainsi, l'unité de lecture (6) lisant le code,
d) si nécessaire, répéter l'étape c) du procédé une ou plusieurs fois,
e) détacher l'unité électronique (4) de l'élément textile (3), de sorte que, en position de pause (10), l'utilisateur (2) soit apte à travailler.
